# EUROPEAN PATENT APPLICATION

(11) **EP 2 924 234 A2**
(43) Date of publication of application: **30.09.2015**
(21) Application number: 15156816.9
(22) Date of filing: 26.02.2015
(51) Int. Cl.: E21B 45/00, E21B 49/00

(54) **Automated rate of penetration optimization while milling**

(30) Priority: 28.02.2014 US 201461945852 P
(71) Applicant: Services Petroliers Schlumberger, 75007 Paris (FR); Schlumberger Holdings Limited, Road Town, Tortola 1110 (VG); SCHLUMBERGER TECHNOLOGY B.V., 2514 JG Den Haag (NL)
(72) Inventor: Tunc, Gokturk, Houston, TX Texas 77042 (US); Johnson, Ashley Bernard, Cambridge, Cambridgeshire CB3 0EL (GB); Sharma, Anurag, Houston, TX Texas 77065 (US); Fairweather, Alan, Aberdeen, AB12 4YB (GB); Aldred, Walter David, Cambridge, Cambridgeshire CB3 OEL (GB)
(74) Representative: Li, Boxi

(57) **Abstract**

A method for automating a downhole milling process includes receiving an input stream from at least one sensor within a downhole milling system, and segmenting the input stream. A safe operating envelope is identified based on segments of the input stream and models for the segments. At least one parameter of the milling system is then automatically changed along a path of optimal rate of penetration while remaining within the safe operating envelope. In some embodiments, an input stream may include surface pressure and the safe operating envelope may include swarf transport conditions.

## Description

### CROSS-REFERENCE TO RELATED APPLICATIONS

This application claims the benefit of, and priority to, United States Patent Application Serial No. 61/945,852, titled "Automated Rate of Penetration Optimization While Milling," filed on February 28, 2014, which application is expressly incorporated herein by this reference in its entirety.

### BACKGROUND

In the drilling, completing, or reworking of oil wells, a variety of downhole tools may be used. For instance, a drill string may include several joints of drill pipe coupled end-to-end through one or more tool joints, and the drill string may transmit drilling fluid and/or rotational torque from a drill rig to the downhole tool. The downhole tool may be included on, or coupled to, a bottomhole assembly and may facilitate various types of milling or remedial operations, including sidetracking, well abandonment, slot recovery, junk removal, or the like.

In many industries, automated processes are now used for fabrication of products, monitoring operation of systems, interacting machinery with other objects, and the like. In such automated industrial processes, there is a broad latitude of issues that may affect the process. These issues may cause a halt and/or break down of the automated industrial process, may degrade the operation of the automated industrial process, may change the background, environment, or otherwise affect the automated industrial process and change how the automated industrial process works, what the automated industrial process achieves, the goal of the automated industrial process, and the like.

One of issues that may affect the automated industrial process may arise during real-time changing of the operation of the automated industrial process. To mitigate such issues, forward looking models of the automated industrial process may be analyzed and used to control the automated industrial process. Such models may be determined from results from prior processes, theoretically, or experimentally. Mitigation of such issues may also be achieved by obtaining data from the automated industrial process and the environment in which the automated industrial process occurs, and retroactively identifying the existence of an issue.

Merely by way of example, the process of milling out casing within an oil and gas well may be affected by a wide variety of factors, and may include monitoring/interpretation of a considerable amount of data. Accurate measurements of downhole conditions, downhole equipment properties, casing properties, cement properties, milling equipment properties, fluid properties, surface equipment properties, and the like may be analyzed by a surface crew to minimize milling risks, to make determinations as to how to optimize the milling procedure given the data, and to detect/predict the likelihood of a risk or a decrease in milling efficiency.

While computers may be used to process the data, it is often difficult to process the incoming data accurately for real-time control of the milling processes. As such, human operators are commonly used to control the milling processes and to make decisions on optimizing, reducing risks, identifying faults, and the like based on interpretation of the raw/processed data. However, optimization of a milling process and/or mitigation and detection of issues/risks by a human controller may be degraded by fatigue, high workload, lack of experience, the difficulty in manually analyzing complex data, stress and social issues associated with responsibility for a rig and the safety of others, and the like. Furthermore, noisy data may have a large impact on a human observer's ability to take note of or understand the meaning occurrences reflected in the data.

The detection of occurrences reflected in the data goes beyond detection of issues and risks. Accurate analysis of operating conditions may allow an operator to operate the industrial process at near optimal conditions. For example, in the oil and gas industry, the mill-response to changes in parameters such as mill rotational speed and weight-on-mill (WOM) while milling casing is very much affected by changes in the environment and quality of the mill. Accurate and real-time knowledge of a transition from one environment or condition to another (*e.g.,* one pressure/temperature zone to another, a degraded condition of cutting inserts or other cutting elements of a mill, etc.) and real-time analysis of how such conditions impact the effect that parameter changes are likely to have on mill-response may greatly improve the expected rate of penetration (ROP).

Similarly, the constraints that limit the range of the milling parameters may change as the environment changes. These constraints (*e.g.,* the rate at which cuttings are removed by the drilling fluids), may limit the maximum permissible milling parameter values. Without accurate knowledge of these changes in the constraints, an operator may not be fully aware of where the constraints lie with respect to the ideal parameter settings and for the sake of erring on the side of caution, which is natural considering the dire consequences of equipment failures and accidents, an operator may run the milling process at parameters far removed the actual optimal parameters. Considering that milling and remedial services are extremely costly procedures, the operation of a milling or remedial system at less than optimal parameters can be extremely costly.

### SUMMARY

Example embodiments of a method for optimizing rate of penetration in a downhole milling process by automating or partially automating the process may include receiving a stream of input data from a sensor associated with a downhole milling system. A plurality of segments may be identified in the stream of input data, and a changepoint may divide each segment from an adjacent segment. An output may be generated from the plurality of segments using models corresponding to the segments, and the output may be used to control at least one parameter of the downhole milling process.

In accordance with other embodiments of the present disclosure, a method for automating a downhole milling process includes receiving an input stream from a sensor of a downhole milling system, and segmenting the input stream. A safe operating envelope is identified based on segments of the input stream and models for the segments. A parameter of the milling system is then automatically changed along a path of optimal rate of penetration while remaining within the safe operating envelope.

Machine-readable media, processors, and computing systems are further described which include, or access, machine-executable instructions and machine-readable storage media. Upon executing machine-executable instructions, a milling system, as guided by a computing system, may perform a method of optimizing rate of penetration. The method may include any of the methods described herein.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF DRAWINGS

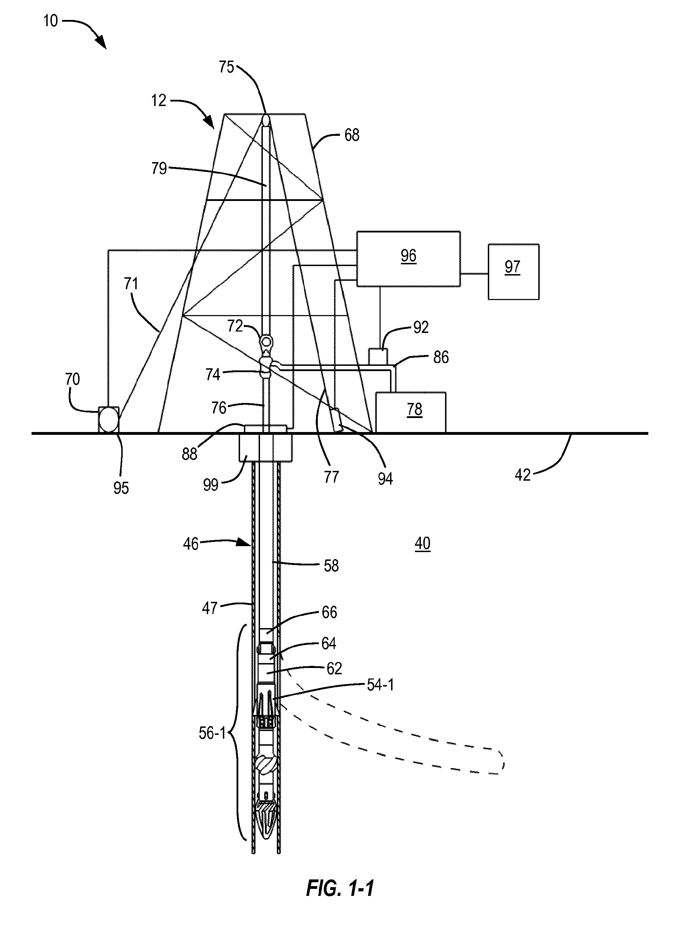

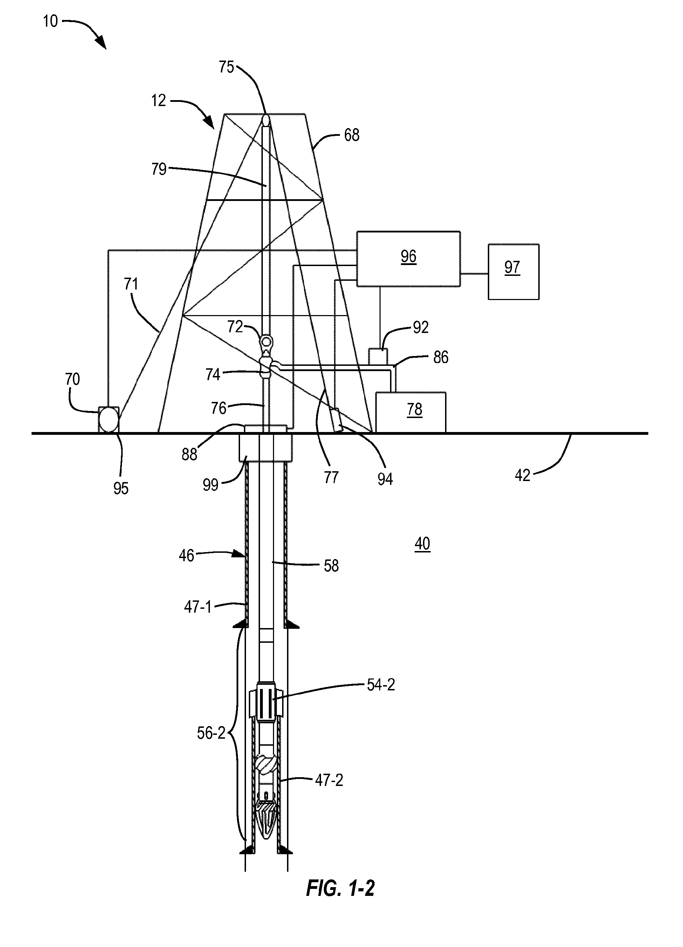

FIG. 1-1 schematically illustrates a section milling system including an automation and control system, in accordance with some embodiments of the present disclosure.
FIG. 1-2 schematically illustrates a casing milling system including an automation and control system, in accordance with some embodiments of the present disclosure.
FIG. 2 schematically illustrates a system for processing data to automate downhole-milling processes, in accordance with some embodiments of the present disclosure.
FIG. 3 is a graph illustrating changes in volume of a mud pit employed in a drilling operation including two distinct changes in volume indicative of a change in operating condition during a wellbore drilling process, in accordance with some embodiments of the present disclosure.
FIGS. 4-1 to 4-4 are graphs illustrating inclination and azimuth measurements obtained during a portion of a directional drilling operation, in accordance with some embodiments of the present disclosure.
FIG. 5 is a three-dimensional graph illustrating differences in a linear response in a drill bit or cutting insert model for two different data sets, in accordance with some embodiments of the present disclosure.
FIG. 6 is a flow-diagram for obtaining segmentations of data streams that may include changepoints, according to some embodiments of the present disclosure.
FIG. 7 is an illustration of a tree data structure showing four-levels of data modeling corresponding to four data points and weights associated with the various segmentations illustrated therein, according to some embodiments of the present disclosure.
FIG. 8 is a block diagram of a system for using a changepoint detector in conjunction with a process control program, according to some embodiments of the present disclosure.
FIG. 9-1 and 9-2 are graphs illustrating possible segmentations for the inclination and azimuth measurements of FIG. 4, according to some embodiments of the present disclosure.
FIGS. 10-1 and 10-2 includes graphs illustrating the output calculated by a changepoint detector for determining the probability of a kick from the data stream shown in FIG. 3, according to some embodiments of the present disclosure.
FIG. 11 is a flow-diagram illustrating the operation of a changepoint detector to determine the probability of a ramp having a value greater than a given threshold, according to some embodiments of the present disclosure.
FIG. 12 illustrates the output of a changepoint detector acting as an input to a Bayesian Belief Network (BBN) to use that output in conjunction with a change in rig state output to draw an inference as to whether a kick has occurred, according to some embodiments of the present disclosure.
FIG. 13 is a graph illustrating the relationship between rate-of-penetration (ROP) as a function of weight-on-mill (WOM) and mill rotational speed (RPM), according to some embodiments of the present disclosure.
FIG. 14 includes the graph of FIG. 13 with milling process constraints super-imposed thereon to define a safe operating window, according to some embodiments of the present disclosure.
FIG. 15 is a screen shot of a graphic user interface displaying drilling data collected during a drilling operation, straight line models corresponding to a desired segmentation, the safe operating window corresponding to the current segmentations, current drilling parameters used, and recommended parameters to optimize rate of penetration, according to some embodiments of the present disclosure.
FIG. 16 is a flow-chart illustrating the operation of a changepoint detector to determine recommended parameters in an ROP optimizer, according to some embodiments of the present disclosure.
FIG. 17 is a user interface including a chart showing vibrations measured while section milling casing, according to some embodiments of the present disclosure.
FIG. 18 illustrates a milling log file, according to some embodiments of the present disclosure.
FIG. 19 illustrates logs of simulated and actual lateral vibrations during a milling operation, according to some embodiments of the present disclosure.

### DETAILED DESCRIPTION

Some embodiments disclosed herein relate to apparatuses, tools, assemblies, systems, and methods for providing real-time control, optimization, or automation of a downhole milling process. Example embodiments of the present disclosure relate to methods, systems, assemblies, and tools for the real-time interpretation and/or processing of data associated with downhole milling and remedial processes.

Specific embodiments of the present disclosure will now be described in detail with reference to the accompanying figures. In the following description of some embodiments of the present disclosure, numerous specific details are set forth in order to provide a more thorough understanding of such embodiments. It will be apparent to one of ordinary skill in the art in view of the disclosure herein that the embodiments disclosed herein may be practiced without the specific details set forth herein, or in combination with other details or features.

FIG. 1-1 shows an example milling system 10 using changepoint detection in the control of the milling system 10, according to one embodiment of the present disclosure. As depicted, a drill string 58 may be tripped into a cased wellbore 46. The cased wellbore 46 may be located in the earth 40, and may descend downwardly from a surface 42. A bottomhole assembly (BHA) 56-1 that is itself attached to and forms the lower portion of the drill string 58 may include a mill 54-1 for cutting/milling casing 47 of the cased wellbore 46.

The BHA 56-1 may contain a number of devices including various subassemblies. According to an embodiment of the present disclosure, measurement-while-drilling (MWD) subassemblies may be included in subassemblies 62. Examples of typical MWD measurements include direction, inclination, survey data, downhole pressure (inside the drill string, and outside or annular pressure), resistivity, density, and porosity. The subassemblies 62 may also include is a subassembly for measuring torque and weight on mill. In some embodiments, the subassemblies 62 may operate in a memory mode to record measurements for subsequent use in designing a mill, evaluation during a subsequent mill run, or for other uses.

The subassemblies 62 may generate signals related to the measurements made by the subassemblies 62. The signals from the subassemblies 62 may be processed by a processor 66. After processing, the information from processor 66 may be communicated to a communication assembly 64. The communication assembly 64 may include, in some embodiments, a pulser, a signal processor, an acoustic processor, a wireless processor, or other communication device. In general, the communication assembly 64 may convert the information from processor 66 into signals that may be communicated as pressure pulses in the drilling fluid, as signals for communication through an optic fiber or through a wire, as signals for wireless or acoustic communication, or in other manners. In different embodiments, other telemetry systems, such as wired pipe, fiber optic systems, acoustic systems, wireless communication systems and/or the like may be used to transmit data to the surface system. Embodiments of the present disclosure may be used with any type of sensor associated with the oil and gas industry, and with any type of telemetry system used with the sensor for communicating data (*e.g.,* from the sensor to a changepoint detector), according to one or more embodiments of the present disclosure.

As shown in FIG. 1-1, a drilling rig 12 may include a derrick 68 and hoisting system, a rotating system, a mud circulation system, or other components. The hoisting system suspending the drill string 58, may include draw works 70, fast line 71, crown block 75, drilling line 79, traveling block and hook 72, swivel 74, and deadline 77. The rotating system may include kelly 76, rotary table 88, and engines (not shown). The rotating system may impart a rotational force on the drill string 58. Although a system with a kelly 76 and rotary table 88 is shown in FIG. 1-1, those of skill in the art will recognize in view of the present disclosure that embodiments of the present disclosure are also applicable to top drive drilling arrangements. Although the milling system is shown in FIG. 1 as being on land, those of skill in the art will recognize that embodiments of the present disclosure are also equally applicable to offshore and marine environments.

In FIG. 1-1, the mud circulation system may be used to pump drilling fluid down the central opening in the drill string 58. The drilling mud may be stored in mud pit 78 and drawn in to mud pumps (not shown), which pump the mud through stand pipe 86 and into the kelly 76 through swivel 74 which contains a rotating seal. Mud then passes through drill string 58 and through mill 54-1. As the blades of the mill 54-1 (shown as a section mill) grind and gouges the casing 47 into cuttings, the mud is ejected out of openings or nozzles in the mill 54-1 or other component of BHA 56. These jets lift the cuttings off the bottom of the hole and away from the mill 54-1, and up toward the surface in the annular space between drill string 58 and the wall of wellbore 46.

At the surface, the mud and cuttings leave the well through a side outlet in a blowout preventer 99 and through a mud return line (not shown). The blowout preventer 99 may include a pressure control device and a rotary seal. The mud return line feeds the mud into a separator (not shown) for separating the mud from the cuttings. From the separator, the mud may be returned to the mud pit 78 for storage and re-use.

Various sensors are placed in the milling system 10 to take measurement of the milling equipment. In particular, hookload may be measured by hookload sensor 94 mounted on deadline 77, block position and the related block velocity may be measured by block sensor 95, which is part of the draw works 70. Surface torque may be measured by a sensor on the rotary table 88. Standpipe pressure or surface pressure may be measured by other sensors (*e.g.,* pressure sensor 92, located on standpipe 86). Additional sensors may be used to detect the location/depth of the mill 54-1. Signals from these measurements may be communicated to a central surface processor 96. In addition, mud pulses traveling up the drill string 58, fluid pressure, or other input streams or measurements may be detected by the sensor 92.

The pressure sensor 92 may include a transducer that converts the mud pressure into electronic signals. The pressure sensor 92 may be connected to surface processor 96 for converting the signal from the pressure signal into digital form, and for storage and demodulation of the digital signal into useable MWD data. According to various embodiments described herein, surface processor 96 may be programmed for automatic detection of the most likely rig state based on the various input channels described. Processor 96 may also be programmed to carry out automated event detection as described herein. Processor 96 may transmit the rig state and/or event detection information to a user interface system 97 which may warn the operators or other personnel of undesirable events and/or suggest activity to the personnel to avoid undesirable events, as described herein. In other embodiments, user interface system 97 may output a status of milling operations to an operator, which may be a software application, a processor, or other automated component, and the operator may manage the milling operations using the status. In some embodiments, processor 96 and user interface system 97 may detect and/or display events or statuses related to, for instance, swarf transport conditions.

In particular, in some embodiments, processor 96 may be further programmed, as described herein, to interpret the data collected by the various sensors to provide an interpretation in terms of activities that may have occurred in producing the collected data. Such interpretation may be used to understand the activities of a mill operator, to automate particular tasks of a mill operator, to provide suggested course of action such as parameter setting, and to provide training for milling system operators.

In the process of milling the casing 47, a plurality of sensors may be used to monitor the process. Such sensors may, for instance, monitor the functioning of the milling components, the state of drilling fluids on the surface or in the wellbore, the state of expandable mill blades, the depth of a cut by a mill into casing, or the like.

As discussed herein, the mill 54-1 of the milling system 10 may be a section mill. In operation, one or more blades of the section mill 54-1 may be selectively retracted and/or expanded. For instance, the blades may be in a retracted state upon insertion of the section mill 54-1 into the wellbore 46. Upon reaching a desired depth, the blades may be expanded using mechanical actuation, hydraulic actuation, or the like. The blades may expand into the casing 47 and weight-on-mill (WOM), rotation of the BHA 56, and maintaining the blades in the expanded position may be used to mill the casing. The drill string 58 and section mill 54-1 may be move axially upwardly or downwardly to increase a size of the milled-out portion of the casing 47 within the wellbore 46. The milled-out, or openhole, portion of the wellbore 46 may then be suitable for rock-to-rock plugging, slot recovery, sidetracking, or other operations. FIG. 1-1, for instance, illustrates an embodiment in which a sidetracked, lateral borehole may be formed, as shown in dashed lines.

A section mill is one type of mill that may be used in accordance with aspects of the milling system 10. Other types of mills or cutting devices may include, for instance, pipe cutters, casing cutters, junk mills, casing mills, or the like. FIG. 1-2, for instance, illustrates the same milling system 10 with a BHA 56-2 that includes a casing mill 54-2. Unlike the section mill 54-1 of FIG. 1-1, the casing mill 54-2 may include fixed blades. Thus, as the casing mill 54-2 is tripped into the wellbore, the casing mill 54-2 may immediately begin milling any casing it contacts. In accordance with some embodiments of the present disclosure, the casing of the wellbore 46 may include outer casing 47-1 and inner casing 47-2. The outer casing 47-1 may extend from the wellhead to a particular depth. The inner casing 47-2 may be located inside the outer casing 47-1 and extend from the wellhead to a greater depth. In other embodiments, the inner casing 47-2 may be a string of liner sections that are suspended from within the outer casing 47-1, but which do not extend from the wellhead.

As shown in FIG. 1-2, the casing mill 54-2 may have blades sized and designed to mill the inner casing 47-2. As a result, when the casing mill 54-2 is inserted into the wellbore 46, the casing mill 54-2 may immediately begin to mill the inner casing 47-2. If the inner casing 47-2 includes liner sections, the casing mill 54-2 may begin to mill the inner casing 47-2 upon being run to the depth where the inner casing 47-2 begins. As shown in FIG. 1-2, the casing mill 54-2 has begun milling the inner casing 47-2, and has created a gap, or openhole section, between the lower end of the outer casing 47-1 and the upper end of the inner casing 47-2. This openhole section may be used for rock evaluation, slot recovery, wellbore abandonment and plugging, sidetracking, or other uses.

Regardless of the type of components within the milling system 10 (*e.g.,* section mill 54-1 of FIG. 1-1, casing mill 54-2 of FIG. 1-2, a pipe cutter, a casing cutter, a junk mill, a lead mill, a dress mill, a follow mill, etc.), embodiments of the present disclosure relate to characterizing the downhole environment, and evaluating the downhole environment for real-time monitoring and control of the milling equipment. In some embodiments, this may be done using an automated system including one or more processors.

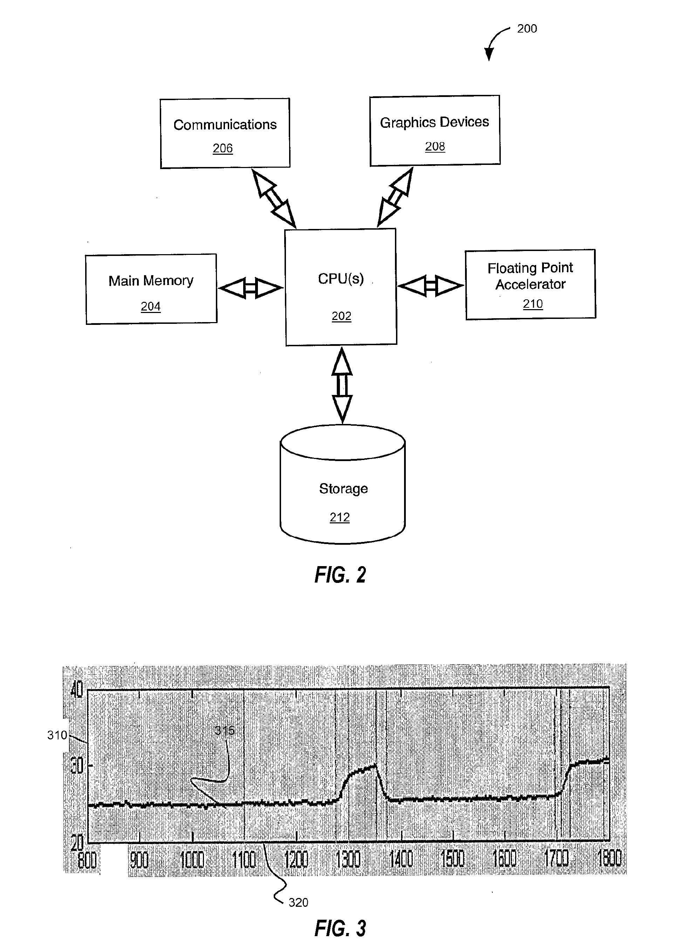

FIG. 2 shows further detail of a processor 200, according to some embodiments of the disclosure. Although a single processor 200 is shown, it should also be appreciated in view of the present disclosure that multiple processors 200 may be included. The illustrated processor 200 may include of one or more central processing units 202, main memory 204, communications or I/O modules 206, graphics devices 208, a floating point accelerator 210, storage 212 *(e.g.,* optical or magnetic tapes, discs, etc.), other components, or a combination of the foregoing. It should be noted that while the processor 200 may be part of a system at a milling site, the processor 200 may also be located, for example, in an exploration company data center or headquarters. It should be noted that many alternative architectures for processor 200 are possible and that the functionality described herein may be distributed over multiple processors. Each such alternative is considered equivalent to the architecture illustrated and described here.

Data collected by various sensors in industrial processes are often very noisy. Such noise may cause real-time human interpretation of the data near impossible. Furthermore, calculations based on individual datapoints may amplify the effect of the noise and decrease the ability to respond quickly to changing conditions.

FIGS. 3 to 5 are illustrations of various examples of data that may be encountered in a process of drilling wells in the exploration for subterranean resources such as oil, gas, coal, and water. While such data relates to drilling systems as opposed to milling of casing within a well, one skilled in the art will appreciate in view of the present disclosure that similar data may be obtained for a milling system. Indeed, according to some embodiments of the present disclosure, a real-time automation, optimization, or control system may use drilling models to approximate milling data, while gathering data to allow creation of specific milling, casing milling, steel milling, or other models.

FIG. 3 shows pit volume data signals 315 changing with time in a process of drilling a wellbore. In the process of drilling a wellbore, drilling fluid (or so-called mud) may be pumped down the central opening in the drill pipe through nozzles in the drill bit. The mud then returns to the surface in the annular space between the drill pipe and the inner-wall of the wellbore, and is returned to the mud pit, ready for pumping downhole again. Sensors may measure the volume of mud in the pit and the volumetric flow rate of mud entering and exiting the wellbore. An unscheduled influx of formation fluids into the wellbore is called a kick and is potentially dangerous. The kick may be detected by observing that flow-out is greater than flow-in and that the pit volume has increased.

In FIG. 3, a pit volume data signal 315 is plotted against a time axis 320. The pit volume data signal 315 may be measured in cubic meters (m³) and illustrated on a volume axis 310. During the drilling process, a kick may be observed in the data at around t=1300 and t=1700 time on the time axis 320. The kick is identifiable in the pit volume data signal 315 as a change in the gradient of the pit volume data signal 315. Detection of these kicks may, in accordance with embodiments of the present disclosure, be performed automatically for correlating the occurrence of kicks with other events taking place in the corresponding drilling or milling operation.

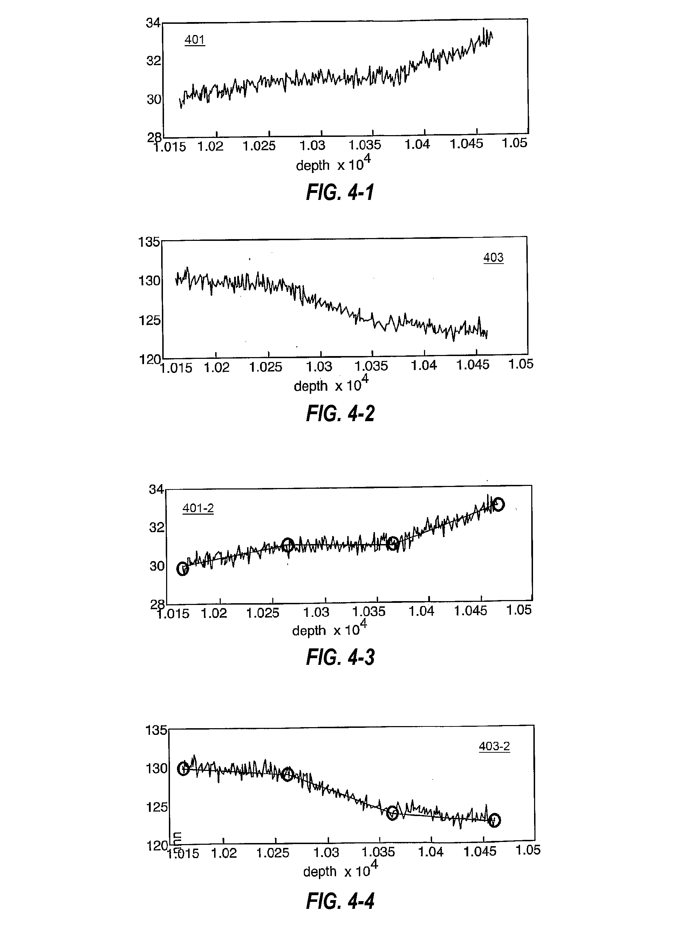

FIGS. 4-1 to 4-4 are graphs illustrating inclination 401 and azimuth 403 measurements obtained during a portion of a directional drilling operation. Inclination 401 and azimuth 403 measurements may be used by a driller in adjusting a drilling operation to arrive at particular target formation. The driller may use these measurements to predict whether the desired target is likely to be intersected and may take corrective actions to parameters such as weight-on-bit (WOB) and drilling rotational speed to cause the drilling trajectory to change in the direction of the target if desired. In a milling system, a lead mill may be used to initiate a lateral wellbore during a sidetracking operation, and measurements of inclination 401 and azimuth 403 may be similarly obtained to ensure a casing window is produced at a desired location and orientation.

As may be seen in FIGS. 4-1 to 4-4, both the continuous inclination data channel 401 and the continuous azimuth data channel may have rather noisy data. Yet, examination of the data reveals certain trends illustrated by the segmented straight lines superimposed on the raw data in FIGS. 4-3 & 4-4, respectively. For example, in the inclination data 401-2, the data seems to follow a ramp from a depth of about 1.016×10⁴ to a depth of about 1.027×10⁴, followed by a step to a depth about 1.0375×10⁴, and another ramp to a depth of about 1.047×10⁴. For determination of the curvature of the well ("dogleg severity") and direction of the curvature ("toolface"), embodiments of the present disclosure contemplate the use of models reflecting these steps and ramps as opposed to any one data point in the data stream. Using such models may have increased accuracy and/or reliability over traditional models taking stationary measurements at 30 foot (9.1 meter) or 90 foot (27.4 meter) intervals because calculation based models using step and ramp models of the data may be used in real-time, without taking the drilling operation off-bottom, and may provide dogleg severity and toolface calculations at relatively short intervals.

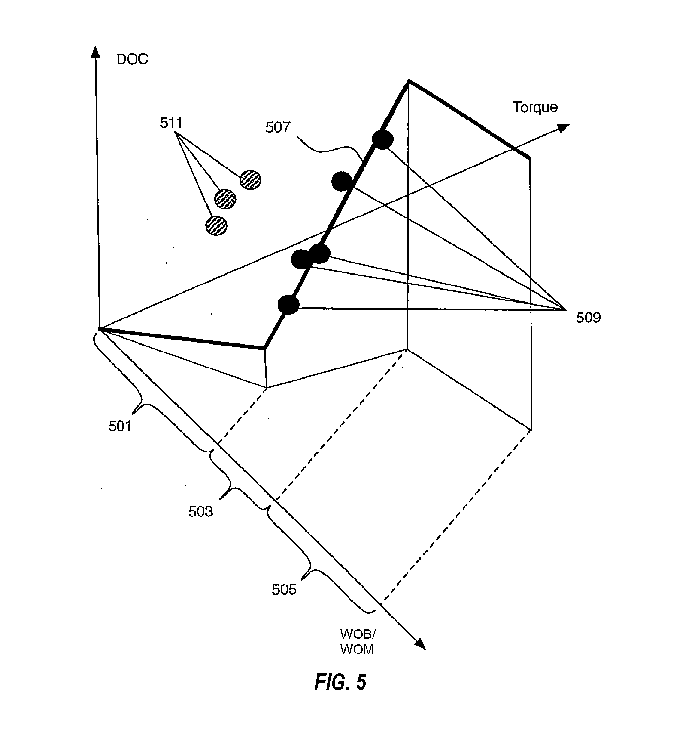

FIG. 5 is yet another graphical illustration of how changes in lithology may affect drilling operations, in this case, the bit response of a polycrystalline diamond compact (PDC) bit in the three-dimensional space defined by WOB, depth of cut (DOC), and torque. The bit response may tend to have three phases with respect to the WOB applied, with each phase having a relatively linear bit response. Milling systems may exhibit similar trends. A mill may, for instance, have tungsten carbide or other cutting inserts brazed to a surface thereof. Changes in the downhole environment (*e.g.,* temperature, pressure, etc.), as well as changes to weight-on-mill (WOM), DOC, rate of penetration (ROP), torque, RPM, and other factors may result in mill response also tending to have three phases with respect to the WOM applied, each phase also having a relatively linear mill response.

In a first phase 501, with low WOB/WOM applied, very low DOC may be achieved. In a drilling environment, at low WOB most of the interaction between the bit and rock occurs at the wear flats on the cutters. Neither the rock surface nor the wear flat will be perfectly smooth, so as DOC increases, the rock beneath the contact area will fail and the contact area will enlarge. This continues until a top-end DOC where the failed rock fully conforms to the geometry of the wear flats and the contact area grows no larger. A corresponding scenario can be understood with respect to milling systems. A casing mill, for instance, may have cutting inserts that engage casing made from steel or other embodiments. As the DOC of the mill increases, the casing beneath a contact area may fail and the contact area will enlarge. When the top-end DOC is achieved, the failed casing may confirm to the geometry of the cutting insert. In a steel casing scenario, the failed casing may actually form swarf and chip breakers in the cutting insert may cut the swarf to avoid so-called "bird-nesting."

Next, a second phase 503 corresponds to an intermediate amount of WOB. In this phase 503, beyond a top-end DOC, any increase in WOB may translate into pure cutting action. In a drilling scenario, the bit may incrementally behave as a perfectly sharp bit until the cutters are completely buried in the rock and the founder point is reached. In a milling scenario, the cutting inserts of the mill may respond to the intermediate amount of WOM and behave as perfectly sharp until the engaged cutting inserts are completely buried in the casing.

The third phase 505 may be similar to the first phase 501 in that little may be gained from additional WOB. The response past the founder point depends on how quickly the excess WOB is applied. Applied rapidly in a drilling scenario, the uncut rock ahead of the cutters may contact with the matrix body of the bit and act in a similar manner to the wear flats in the first phase, so DOC may increase slightly with increasing WOB. Applied slowly, the cuttings may become trapped between the matrix and the uncut rock, so DOC may decrease with increasing WOB. Similarly, in a milling operation, rapid application of WOM may cause uncut casing ahead of the cutting inserts to contact the blade or mill body and slightly increase DOC or ROP. With slow application of WOM, cuttings may become trapped and DOC and ROP may decrease with increasing WOM. Drillers and millers may prefer to operate near the top of the second phase with the optimal DOC achieved without wasting additional WOB/WOM.

Depth of cut per revolution (DOCPR) can be estimated by dividing ROP by RPM, so real-time drilling and milling data can be plotted in three-dimensional space. FIG. 5, for instance, illustrates an example three-dimensional graph of drilling data, with the three variables including WOB, bit torque, and DOC. As the bit drills into a new formation, the response may change abruptly and the points will fall on a new line. The plotted line 507 illustrates a model of the bit response for a first formation corresponding to collected data points 509. On the other hand, data points 511 correspond to data collected in a different formation from the data points 509. If the second set (511) correspond to data encountered after the first set (509), a change in formation and ancillary operating conditions may have occurred. Milling operations may be plotted in a similar manner. For instance, although milling operations may be cutting steel and/or cement rather than primarily formation, changes in milling conditions may nonetheless occur when encountering casing joints, downhole jewellery, or changes in casing type (*e.g.,* material, size, thickness, etc.).

A straight line in three dimensions may have four unknown parameters, two slopes and the intersection with the x-y plane *(i.e.,* the WOB-torque plane in FIG. 5). These parameters could be estimated with a least squares fit to a temporal or spatial sliding window (*e.g.,* last five minutes or last ten feet of data), but this may poorly fit the data in the vicinity of formation boundaries. For example, in FIG. 5, plotting a straight line through both the points of the first set (509) and points of the second set (511) could yield bizarre model parameters.

PDC bit models for drilling may be applied in the field by manual inspection of the data and breaking it up into homogeneous segments. Similarly, tungsten carbide cutting insert models for milling may be applied in the field by manual inspection of the data and breaking it into homogeneous segments. In FIG. 5, for example, a straight line may be fitted to the data points 509 while a second straight line (not shown) may be fitted to the data points 511, thereby avoiding the cross-class polluted estimates produced by a moving window. While in a simplified example as illustrated in FIG. 5, it is possible to visually see that the data points 511 and the data points 509 lie/occur on different lines. With real world data, this is a labor-intensive process that has hitherto prevented application of the PDC bit model in controlling drilling systems/procedures, and prevented application of cutting insert models in controlled milling systems/procedures.

Returning again to FIGS. 4A and 4B, and as discussed herein, the data may be segmented into three different segments and each segment having associated therewith a model particularly useful for modeling the data in that segment. In some embodiments of the present disclosure, the data is modeled using either ramp or step functions, for example, using the least squares algorithm, and these models are evaluated using Bayesian Model Selection. Thus, for each segment of each segmentation, a model that is either a ramp or a step may be assigned and the corresponding segmentations may be assigned a weight indicative of how well the segmentation and associated models conform to the data stream as compared to other segmentations.

In embodiments of the present disclosure, real-time data analysis may be provided by treating incoming data as being composed of segments. Between the segments are what are referred to herein as "changepoints". The changepoints may be identified by the data analysis to provide for detection in changes in an automated milling process. In certain aspects, a plurality of sensors or the like may provide a plurality of data channels that may be segmented into homogeneous segments and data fusion may be used to cross-correlate, compare, contrast, or otherwise use changepoints in the incoming data to provide for management of the automated milling procedure.

In an embodiment of the present disclosure, the data may be analyzed in real-time to provide for real-time detection, rather than retrospective, detection of the changepoint. In an embodiment of the present disclosure, the data from one or more sensors may be fitted to an appropriate model and from analysis of the incoming data with regard to the model, changepoints may be identified. The model may be derived theoretically, from experimentation, from analysis of previous operations and/or the like. Accordingly, some embodiments also contemplate memory storage modes and/or post-operation use of data from downhole milling operations so that data may be used after a run to update analysis models, perform tool optimization and/or re-design, or the like. Indeed, in some embodiments, a drilling model may initially be used for real-time analysis of milling operations. The data from the milling operation may retroactively be used (potentially with data from other milling runs) to update the drilling model to arrive at a milling model more closely correlating to the operations of a section mill, casing mill, or other milling tool as steel casing is ground away. The updated milling models may then be used in subsequent runs for rea-time analysis of milling operations and processes.

In an embodiment of the present disclosure, data from an automated milling process may therefore be analyzed in a real-time process using changepoint modeling. The changepoint models may divide a heterogeneous signal from one or more sources associated with the milling process into a sequence of homogeneous segments. The discontinuities between segments may include the so-called changepoints.

Merely by way of example, a real-time changepoint detector in accordance with an embodiment of the present disclosure, may model the data in each homogeneous segment as a linear model, such as a ramp or step, with additive Gaussian noise. Such models may be used, for instance, when the data has a linear relationship to the index. In alternative embodiments, more complex models may be employed (*e.g.,* exponential, polynomial, trigonometric, logarithmic, or other functions). As each new sample (set of data) is received, the algorithm may output an updated estimate of the parameters of the underlying signal (*e.g.,* the mean height of steps, the mean gradient of ramps, the mean offset of ramps, etc.), and additionally the parameters of the additive noise. For zero-mean Gaussian noise, the parameters may include the standard deviation or the variance, but for more general noise distributions, other parameters such as skewness or kurtosis may also be estimated.

If so chosen, a changepoint may be designated where the noise parameters are found to have changed. In some embodiments of the present disclosure, the tails of a distribution may be considered in the analysis, as when analyzing the risk of an event occurring the tails of the distribution may provide a better analytical tool than the mean of the distribution. In an embodiment of the present disclosure, the changepoint detector may be used to determine a probability that the height/gradient/offset of the sample is above/below a specific threshold.

A basic output of the changepoint detector may be a collection of lists of changepoint times and a probability for each list. The most probable list may thus be the most probable segmentation of the data according to the choice of models: G₁, G₂, G₃, .... Gₙ.

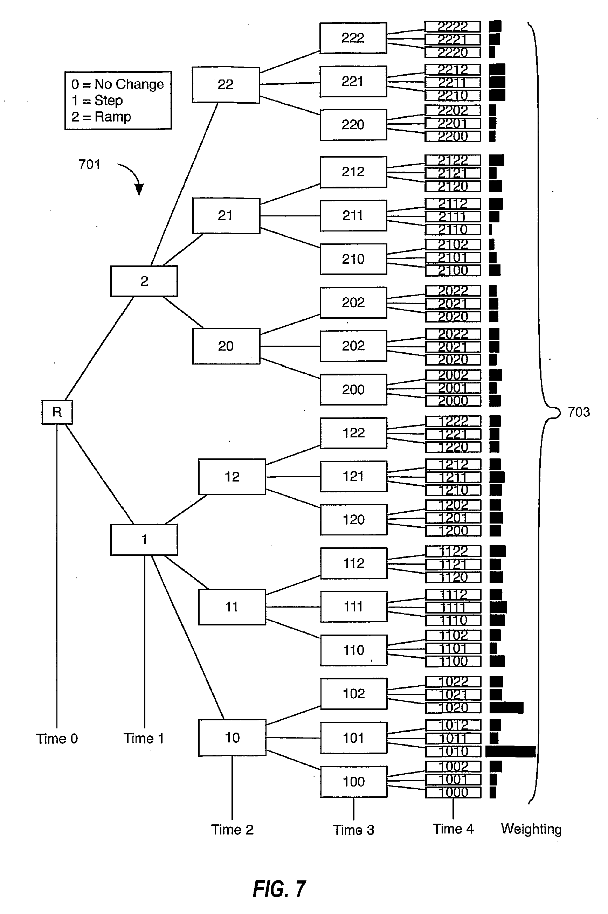

The segmentation of the signal may be described using a tree structure (*see* FIG. 7) and the algorithm may be considered as a search of this tree. At time 0 (*i.e.*, before any data has arrived) the tree may have a single root node, R. At time 1 the root node spawns n leaves, one leaf for each of the n segment models. The first leaf may represent the hypothesis that the first data point is modeled with G₁, the second leaf hypothesis is G₂, etc. At subsequent times, the tree grows by each leaf node spawning n+1 leaves, one for each model and an extra one represented by 0, which indicates that the data point at the corresponding time belongs to the same model segment as its parent. For example, if G₁ were a step model and G₂ were a ramp, a path through the tree from the root to a leaf node at time 9 might be R 100000200, where this would indicate that the first six samples were generated by a step and that the remaining four samples were generated by a ramp.

Over time, the tree may grow and it may be searched using a collection of particles, each occupying a distinct leaf node. The number of particles may be chosen by the user/operator and around 20-100 may be sufficient; however, other amounts of particles may be used in different aspects of the present disclosure. A weight may be associated with a particle, which weight can be interpreted as the probability that the segmentation indicated by the path from the particle to the root (as in the example above) is an accurate segmentation. An objective of the algorithm may be to concentrate the particles on leaves that mean the particle weights will be large.

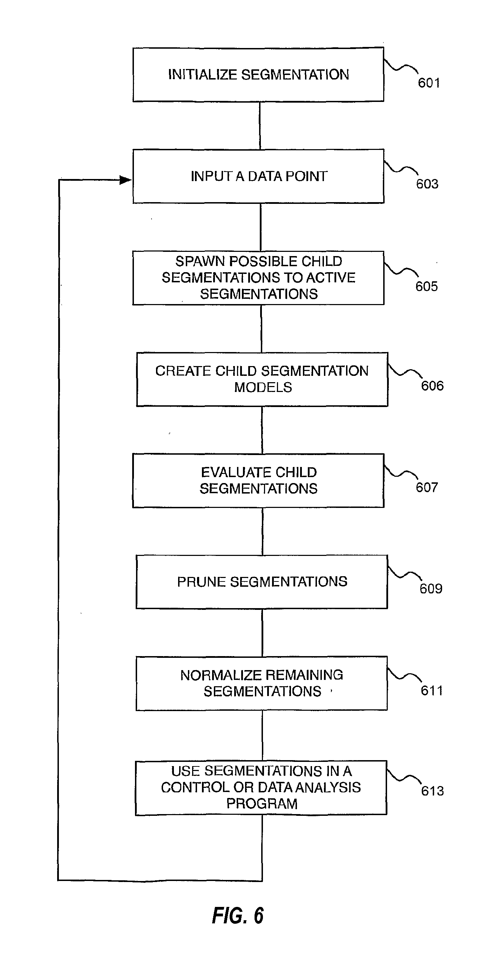

FIG. 6 is a flow diagram illustrating an embodiment of the present disclosure for obtaining segmentations of data streams that may include changepoints. The segmentation process for determining changepoints and associated models may successively build a tree data structure, an example of which is illustrated in FIG. 7, with each node in the tree representing different segmentations of the data. The tree may also be periodically pruned to discard low-probability segmentations *(i.e.,* segmentations that have a poor fit to the data). Thus, a tree-structure initially created for drilling operations may have low-probability segmentations replaced by higher probability segmentations based on milling data.

Initially, the segmentations may be initialized by establishing a root node R (601). Next, a data point may be received from one or more input streams (603). In response, the segmentation process may spawn child segmentations (605) that reflect three different alternatives, namely, a continuation of the previous segment, a new segment with a first model, or a new segment with a second model. In an embodiment of the present disclosure, the models are ramp and step functions. As the root node does not represent any model, the first generation in the tree, reflecting the first data point, starts a new segment which is either a ramp (represented in the tree as 1) or a step (represented in the tree as 2). As will be appreciated by those having ordinary skill in the art, the above example relates to use with two models (*e.g.,* ramp and step); however, in other embodiments additional or other models may be included *(e.g.,* 3 = exponential; 4 = parabolic, etc.). In the example given above, the particle R 100000200 would produce three new child nodes with corresponding particles R 1000002000, R 1000002001, and R 1000002002. The first particle indicates a continuation of the step segment that begins with the 7th data point, the second, a new ramp, and the third, a new step.

Models may then be created by fitting the data in the new segments to the designated models for the segments, and models corresponding to existing segments may be refit (606). For example, if a new ramp segment is to be created for a new child particle, the data in the segment may be fit to that ramp. Naturally, when a new segment is created, the corresponding model that is assigned may merely be a function that puts the model value through the new data point. However, for existing segments in which the segment encompasses a plurality of data points, the model parameters (*e.g.,* the parameters defining the gradient and offset of a ramp, the power of an exponential function, the nature of a parabolic curve, etc.), may be re-evaluated. Some form of linear regression technique may be used to determine the linear function to be used to model the data in the segment as a ramp, step, or other model.

The segmentations produced are next evaluated (607). For instance, Bayesian Model Selection or the like may be used to calculate weights indicative of how good a fit each segmentation is for the underlying data. After the segmentations, creation of model functions, and corresponding models have been evaluated *(i.e.,* after weights are assigned thereto), the tree may be pruned by removing some particles from future consideration and to keep the particle population size manageable (609). The weights of the remaining particles may be normalized (611).

Having evaluated the segmentations of the input data stream, the segmentations and corresponding models may be used in a process control program or in a further data analysis program (613). The use of the segmentations and corresponding models may take several forms. For example, the remaining segmentations may each be used to evaluate the input data in the calculation of a quantity used to compare against a threshold value for the purpose of alerting of a condition to which some corrective action should be taken. In such a scenario, a weighted average (*e.g.,* weighted by the weights associated with each segmentation) may be computed to determine the probability that the condition has or has not occurred. This probability may be used to either trigger an action or suggest an action, or as input into further condition analysis programs.

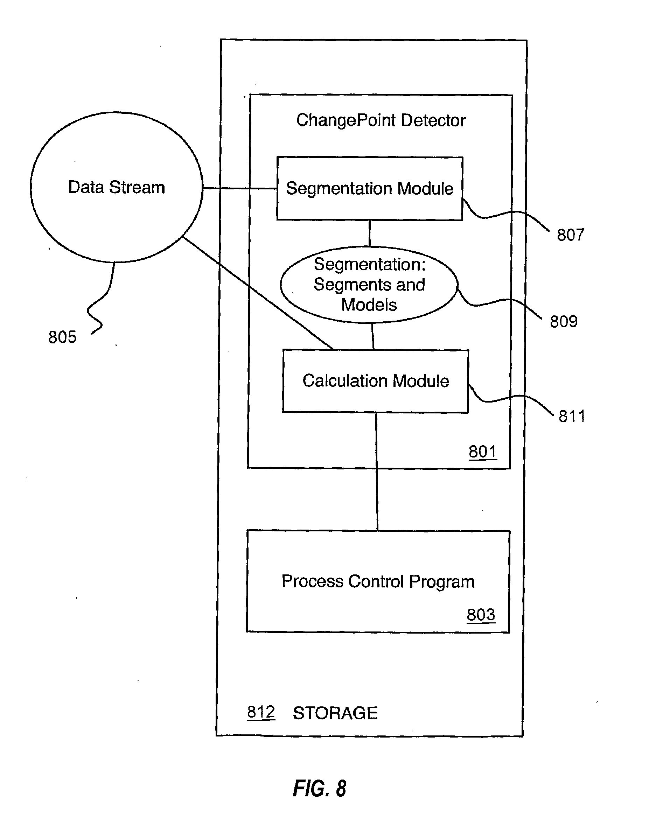

FIG. 8 is a block diagram illustrating a possible software architecture using changepoint detection as described herein. A changepoint detector module 801 and a process control program 803 may both be stored on one or more storage devices 812 of a computing system used to receive and analyze sensor data obtained from a milling operation, and for real-time monitoring and control of the milling operation. The changepoint detector module 801 may contain computer instructions executable by one or more CPUs or other processors to provide calculations as described herein (e.g., the process flow set forth in FIG. 6). These instructions may cause the processor(s) to receive data from a data stream 805 originating from one of various sensors in a milling system.

The input data may be processed by the processor(s) (*e.g.,* CPU(s) 202 of FIG. 2) according to instructions of a segmentation module 807 to produce segmentations 809 of the data as described herein. These segmentations 809 may contain segments defined by intervals of an index of the data stream, and models associated with those segments. The segments may be fed into a calculation module to provide a result from the changepoint detector 801 that in turn is an input to the process control program 803. The result may be a probability of an event having occurred or some other interpretation of the input data (*e.g.,* wear or breakage of a cutting insert, collapsed casing), or even a recommended action (*e.g.,* suggested change in mill rotational speed, WOM, or radial expansion of a mill blade to obtain better ROP).

A more detailed view of FIG. 7, which is a graphical depiction of a segmentation tree 701 and weights 703 associated with the active particles after four time indexes, is now provided. As noted herein, to arrive at a segmentation, a changepoint detector (*e.g.,* changepoint detector 801 of FIG. 8) may use a system of particles and weights. From, Time 0 (which is represented by the root node R) to Time 1, two particles ("1" and "2") are spawned (605 of FIG. 6); the first one ("1") representing a step and the second ("2") representing a ramp. At Time 2 (and each subsequent time index), each of the currently active particles spawns three particles, the first representing no change ("0"), the second representing a step ("1") and the third representing a ramp ("2"), thus producing the particles 10, 11, 12, 20, 21, and 22. This continues for each time index and at Time 4 the tree has grown to 54 particles. For each active particle (*i.e.,* a particle that was spawned at the latest index and that has not been removed through the pruning (609 of FIG. 6), a weight value may be determined (607 and 611 of FIG. 6). These weights are illustrated graphically in FIG. 7 in the weight bar chart 703. The weights may be used to prune the tree 701 by removing the lowest weight particles (*e.g.,* when the number of particles exceeds a preset maximum). As noted in the discussion of FIG. 6, when the weights for the remaining active particles have been determined and normalized, the resulting segmentations may be used in conjunction with a control program (613).

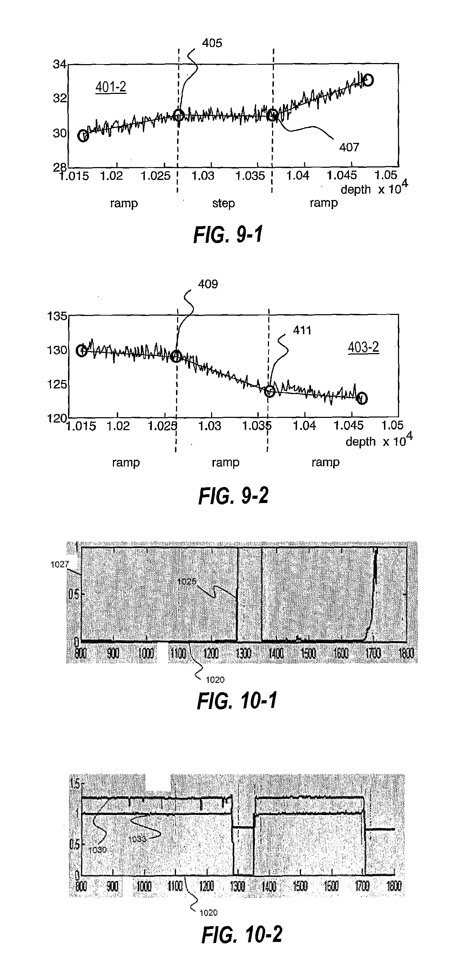

Consider by way of example again the inclination 401 and azimuth 403 input streams from FIGS. 4-1 and 4-2 as they relate to a drilling system. FIGS. 9-1 and 9-2 are illustrations of changepoints identified by a changepoint detector (*e.g.,* changepoint detector 801 of FIG. 8) and the associated models. For example, in the inclination stream 401-2, the changepoint detector may identify changepoints 405 and 407, in addition to changepoints at the start and end of the data set. Similarly, in the azimuth data stream 403-2, the changepoint detector may identify changepoints 409 and 411. For the inclination stream 401-2, the changepoint detector may fit a ramp for the segment up to the first changepoint 405, followed by a step up to the second changepoint 407, and finally a ramp for the data following the second changepoint 407. On the other hand, for the azimuth input stream 403-2, the changepoint detector may fit three successive ramps, each having different gradient.

As discussed herein, there are many processes relating to the drilling of an oil or gas well, the remedial or milling operations within a drilled well, or the operation of any other oil-and-gas-related procedure in which data that is indicative of operating environment is subject to difficult interpretation due to noise or other factors, yet where that data and changes in the operating environment that the data reflects may have large effects on how an operator of the well or operation of the related process or equipment would set parameters for optimal process performance or where the such data, if modeled accurately, may be useful in automation of aspects of the creation/operation of the well.

We now turn to three examples of the use of a changepoint detector (*e.g.,* changepoint detector 801 of FIG. 8) in conjunction with a control program (*e.g.,* control program 803 of FIG. 8). In a first example, a changepoint detector may be used to determine kicks encountered in a drilling or milling operation. In the process of drilling a wellbore or milling casing within a wellbore, a drilling fluid called mud may be pumped down the central opening in the drill pipe and may pass through nozzles or ports in the drill bit, taper mill, drill string, section mill, casing mill, or the like. The mud then returns to the surface in the annular space between the drill pipe and wellbore wall and is returned to the mud pit, ready for pumping downhole again. Sensors may measure the volume of mud in the pit and the volumetric flow rate of mud entering and exiting the well. An unscheduled influx of formation fluids into the wellbore is called a kick and is potentially dangerous. The kick may be detected by observing that flow-out is greater than flow-in and that the pit volume has increased. As discussed herein, FIG. 3 is a graphical depiction of the volume of mud pit changing with time in a process of drilling a wellbore, although a similar graphical depiction may be produced for volume of the mud pit changing with time during a milling process. As also discussed herein, the pit volume signal of FIG. 3 is indicative of kicks at two locations, as changes in the gradient of the pit volume data signal 315.

FIGS. 10-1 and 10-2 illustrates the application of a changepoint detector to the pit-volume data of FIG. 3 in accordance with an embodiment of the disclosure. FIG. 10-1 is a graphical illustration of the output from a changepoint detector. The changepoint detector may process homogeneous segments of the pit volume data 315 from FIG. 3. Using these homogeneous segments, the changepoint detector may produce an output signal indicative of the probability 1025 that a ramp in the pit volume data 315 (FIG. 3) has a gradient greater than 0.001 m³/s. The probability 1025 may be plotted against the time axis 1020 and a probability axis 1027 that provides for a zero to unity probability.

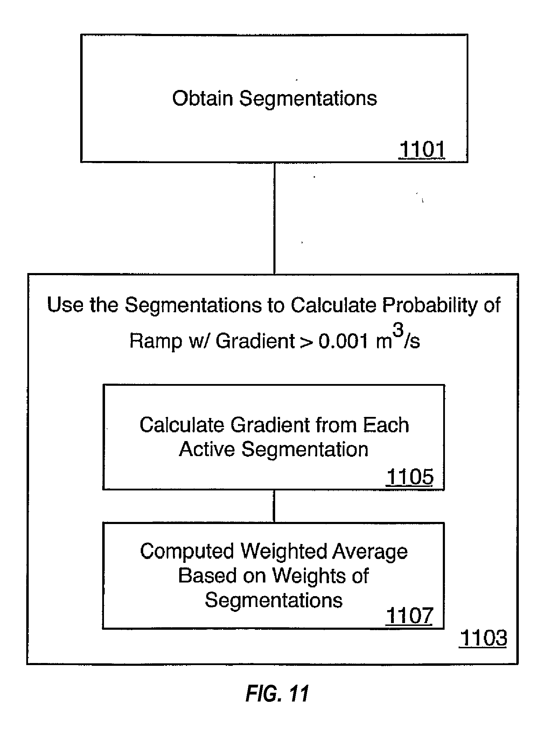

FIG. 11 is a flow-chart illustrating the operation of a changepoint detector to determine the probability of a ramp having a value greater than a given threshold. Applying the method described in conjunction with FIGS. 6 and 7, the changepoint detector may determine possible segmentations and assigns weights to these segmentations (1101). In the example of FIG. 10, this may include determining a number of segmentations, likely including segmentations that indicate steps from t=800 to t=1280 and a ramp from t=1280 to t=1300. Because such segmentations could have a good fit to the data, that segmentations could have very high weights.

Next, a calculation module (*e.g.,* 811 of FIG. 8) may use the segmentations to calculate a desired probability value (103). In the present example, that probability may include the probability of the ramp of the pit volume data exceeding a given threshold, namely, for the purposes of the example, 0.001 m³/s. That result may be obtained by calculating the gradient from the models corresponding to each active segmentation (105), and computing a weighted average over those results based on the weight associated with each segmentation. If one of the possible segmentations under consideration represented a continuation of the model from t=800 which has a very low ramp or even a step, once the volume data starts increasing at t=1300 (and similarly at t=1700) that model may be a poor fit and have a very low weight associated with it. Therefore, at t=1300, the weighted average calculation may give the segmentation that includes a ramp beginning at about t=1280 a very large weight and that segmentation could have a high influence on the weighted average calculation and the final result.

In FIG. 10-1, the probability 1025 may approach unity *(i.e.,* 1 or 100%) around the time the kick may be manually identified in the pit volume data 315 in FIG. 3. As such, the changepoint detector of the present disclosure may provide for using probabilistic gradient analysis of data retrieved during a milling or drilling process to determine in real-time the occurrence of a kick or the like.

FIG. 10-2 illustrates flow-in and flow-out data corresponding to the pit volume data of FIG. 3 for a drilling or milling process. As illustrated, flow-in data 1030 and flow-out-data 1033 for the wellbore operation may be plotted against the time axis 1020. The flow-in/flow-out data 1030, 1033 may not be used in the changepoint detection method illustrated in FIG. 10-1; however, it may be seen that there is a fluctuation in the data at time, t=1700, that corresponds to the kick that the changepoint detector of FIG. 10-1 seeks to detect.

The changepoint detector of FIG. 10-1 may have various characteristics, including:
(a) The probability analysis for the changepoint detector may also approaches unity when a connection of a drill pipe is made at time t=1300.
(b) When the circulation of the system is not at steady-state, the pit volume may be affected by flowline delays and wellbore ballooning.
(c) Thresholding of the gradient of pit volumes may be somewhat arbitrary. To analyze the automated process in real-time, shallow gradients of the received data over long durations may be as determinative in the analysis process as steep gradients received over short durations. As such, since the height of the ramp may correlate to the volume of the influx, it may be used over threshold, base real-time analysis, upon this statistic.
(d) The kick may also be seen in the flow data associated with the downhole process, shown in FIG. 10-2; however, the gradient algorithm may not use this additional data.

To take the additional information available from milling processes into account, the output from the changepoint detector may be fed into additional analysis software for fusing the changepoint detector output with such additional information. For example, the changepoint detector output may be one input to a Bayesian Belief Network (BBN), a neural network, or other such system to combine that output with detection of changes in state *(e.g.,* the current state of the drilling rig, milling tools, etc.).

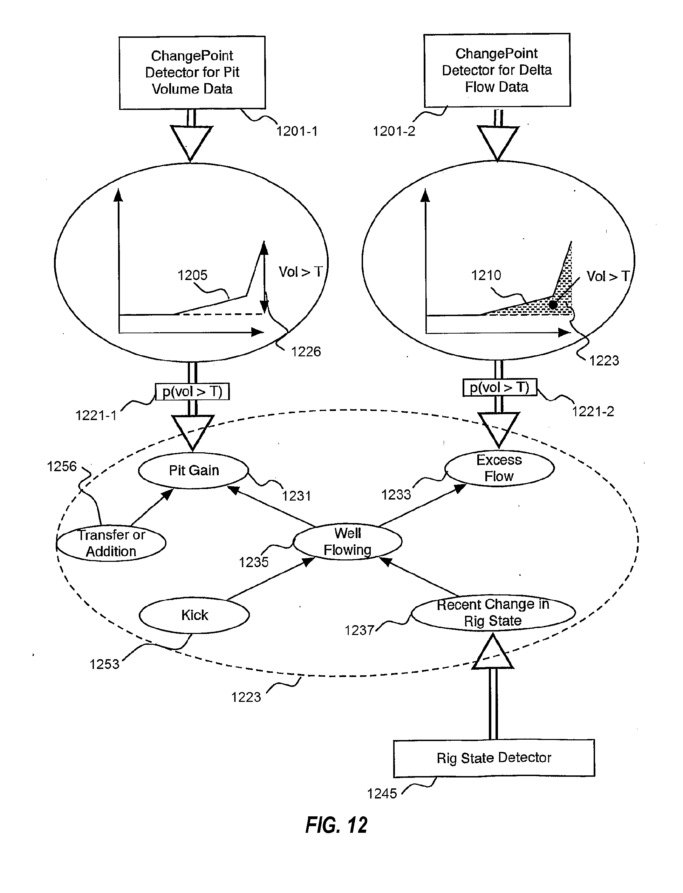

FIG. 12 is a flow-type illustration of changepoint detector for analyzing an automated milling process in which flow-out minus flow-in, called delta flow, and pit volume are probabilistically analyzed to identify changepoints, in accordance with an embodiment of the present disclosure. As depicted in FIG. 12, pit volume data 1205 and delta flow data 1210 may be detected during an automated milling process. In an embodiment of the present disclosure, changepoint detectors 1201- and 1201-2 may be applied to both the pit volume data 1205 and the delta flow data 1210.

As described herein, for example in conjunction with FIGS. 6 and 7, in an embodiment of the present disclosure, the pit volume data 1205 and delta flow data 1210 may be broken down into homogeneous segments in real-time. A first changepoint detector 1201-1 associated with the pit volume data 1205 may analyze the pit volume data 1205 and from comparisons with previous segments may detect when one of the homogeneous segments of the incoming data does not have a positive gradient (*e.g.,* the changepoint detector 1201-1 may detect a step model or a ramp with negative gradient). Similarly, a second changepoint detector 1201-2 associated with the delta flow data 1210 may analyze the pit volume data 1205, and from comparisons with previous segments may detect when one of the homogeneous segments of the incoming data does not have a positive gradient (*e.g.,* the detector 1201-2 may detect a step model or a ramp with negative gradient.

In accordance with some embodiments of the present disclosure, each of the plurality of the changepoint detectors 1201-1, 1201-2 may process for the segment(s) with positive gradient the probability that the influx volume is greater than a threshold volume T. In FIG. 12, the volume is an area under the delta flow ramp(s) 1223 and a vertical height 1226 of the pit volume ramp(s). Each changepoint detector 1201-1, 1201-2 may calculate the overall probability p(vol>T) as a weighted sum of the probabilities from each segmentation hypothesis it has under consideration.

The two continuous probabilities p(vol>T) 1221-1 and 1221-2 may be entered into a BBN 1223 *(e.g.,* into a Pit Gain node 1231 and an Excess Flow node 1233). In an embodiment of the present disclosure, a condition well flowing node 1235 may describe the conditional probabilities of an existence of more fluid exiting the wellbore in which milling is occurring in the automatic milling process than entering the wellbore. Such a condition occurring in the milling process may cause Pit Gain and Excess Flow signatures in the surface channels. The well flowing node output 1235 may be a result of a change in the milling process *(e.g.,* a recent change in rig state at node 1237). For example, the circulation of fluid in the wellbore may not be at a steady-state due, for example, to switching pumps on/off or moving the drill pipe during the milling process. Deliberate changes in the milling process, such as changing pump rates, moving the drill pipe, changing milling rate, and the like may be referred as rig states.

In an embodiment of the present disclosure, a rig state detector 1245 may be coupled with the milling process system. The rig state detector 1245 may receive data from the components of the milling system, the wellbore, the surrounding formation, and the like, and may input a probability of recent change in rig state 1237 to the changepoint detectors 1201-1, 1201-2. In this way, the changepoint detectors 1201-1, 1201-2 may determine when a detected changepoint results from the recent change in rig state 1237. For example, in FIG. 12, the changepoint detector may identify when the Well Flowing node 1235 may be caused by the recent change in rig state 1237.

As depicted in FIG. 12, another cause of well flowing 1235 may be a kick 1253. In an embodiment of the present disclosure, the changepoint detector may analyze the pit volume data 1205 and the delta flow data 1210 to determine occurrence of a changepoint to determine whether the condition of the well flowing 1235 has occurred and may use the probability of a recent change in rig state 1202 to determine an existence of the kick 1253. In an embodiment of the present disclosure, the online determination of the kick 1253 may cause an output of an alarm for manual intervention in the milling process, may cause a control processor to change the automated milling process, and the like. For example, the detection of a kick 1253 may be reported on a control console connected to the central surface processor (*e.g.,* processor 200 of FIG. 2). In certain aspects, data concerning the wellbore, the casing within the wellbore, and the like may be input to the changepoint detector and may allow for greater accuracy in detection of the kick 1253. In some aspects of the present disclosure, if fluid is being transferred into the active mud pit, data concerning such a transfer or addition 1256 may be provided to the changepoint detector as it may cause the Pit Gain 1230 but not Excess Flow 1235. In such aspects of the present disclosure, by inputting the transfer or addition 1256 to the changepoint detector(s), mistaken detection of the kick 1253 may be avoided.

In FIG. 12, the changepoint detectors 1201-1, 1201-2 may be provided raw data and may use Bayesian probability analysis or another suitable analysis or model to model the data and determine an existence of a changepoint. The segmenting of the raw data may provide for flexible modeling of the data within individual segments (*e.g.,* as linear, quadratic, or other regression functions). If a kick is suspected, a flow check may be performed, whereby the mud pumps are stopped and any subsequent flow-out can definitively confirm a kick. To control a kick, the drill string may be lifted until a tool joint is just above the drill floor and then valves called blowout preventers may be used to shut-in the well. The influx may then be circulated to the surface safely before drilling or milling can resume. Small influxes are generally quicker and more simple to control, so early detection and shut-in is useful. Automating the above process should consistently minimize the non-productive time.

The process of FIG. 12 may be applied to a milling system, drilling system, or the like. For instance, in milling, the process may be applied to section milling, casing milling, pipe or casing cutting, junk milling, milling stuck pipe, mill wear, casing collapses, ROP optimization (ROPO), tool failure detection, and the like

Turning now to a second example use of a changepoint detector, namely the application thereof for ROPO in milling processes. Consider again FIG. 5, which illustrates the changes to the linear bit response according to a PDC bit model as a drilling operation advances from one formation having one set of characteristics to another, but which may also represent linear mill response according to a cutting insert model as a milling operation advances from one condition to the next (*e.g.,* cement quality changes, casing quality changes, casing coupling encountered, etc.). As discussed herein, the data points 509 may lie on one line in the three-dimensional space with WOB/WOM, bit torque, and depth of cut representing different dimensions. The three data points 511 may lie on another line in that space. As discussed herein, real-time modeling of this data may be particularly challenging around formation/condition boundaries. Therefore, in an embodiment, a changepoint detector may be used to determine the linear mill response and parameter values that may be derived therefrom. Using the changepoint detector, a straight line may be fitted through the first set 509 and a second straight line may be fitted through the second set 511, thereby avoiding polluting estimates for one condition with data collected from another, for example.

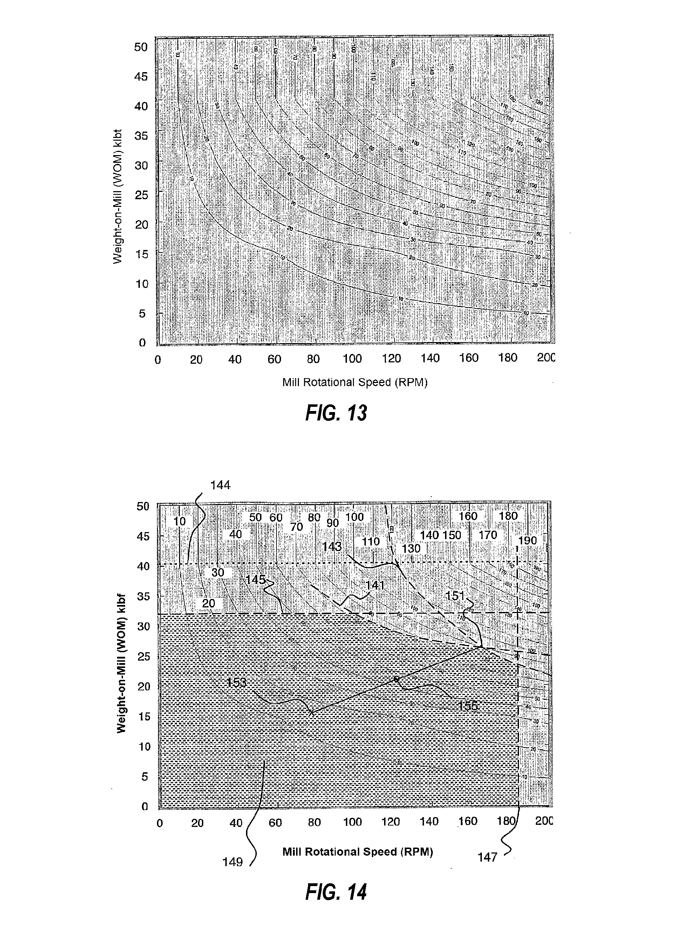

Projecting the three-dimensional fit onto the WOM and depth of cut plane may give a linear equation linking WOM, RPM and ROP. This can be rearranged to give ROP as a function of WOM and RPM, as shown by the contours in FIG. 13. Thus, for a given WOM-RPM pair, a particular ROP may be expected.

The coefficients of the mill/casing model allow various constraints to the milling process to be expressed as a function of WOM and RPM and superimposed on the ROP contours as is illustrated in FIG. 14. For instance, FIG. 14 illustrates the following:
(a) The ROP at which cuttings are being generated too fast to be cleaned from the annulus (141).
(b) The WOM that will generate excessive torque for the top drive (143).
(c) The WOM that will generate excessive torque for the drill pipe (144).
(d) The WOM that exceeds the mill specification for maximum WOB (145).
(e) The RPM that causes excessive vibration of the derrick (147).

The region 149 below these constraints represents the safe operating envelope, and the WOM and RPM that generate the maximum ROP within the safe operating envelope may be sought and communicated to the mill operator. In other embodiments, the WOM and RPM may be passed automatically to an automated mill controller or surface control system.

Examination of the boundaries of the safe operating window 149 reveal that the highest ROP within the safe operating window may be found at the intersection of the hole cleaning plot 141 and the top drive torque plot 143, referred to herein as the optimal parameters 151. For the sake of example, consider the milling operation current RPM and WOM being located at 80 rpm and 15 klbf (153), respectively, with an ROP of approximately 18 ft/hr (5.5 m/hr). The ROP at the optimal parameter combination 151, on the other hand, is approximately 90 ft/hr (27.4 m/hr). Thus, a driller increasing the RPM and WOM in the direction of the optimal parameters would improve the ROP. In an example embodiment, an ROP optimizer may suggest an intermediate combination of RPM and WOM (*e.g.,* the parameter combination approximately one-half the distance 155 between the current parameter combination 153 and the optimal combination 151).

The data that defines the ROP contours and the parameters for the safe operating window may be continuously reported from sensors on the milling apparatus. These sensors may either be located at the surface, in the drill string, or on the mill/BHA. If located at the surface, some filtering and preprocessing may be used to translate the measured values to corresponding actual values encountered by the mill and drill string.

The continuous stream of data may be modeled using the PDC model of FIG. 5, or using a different model. For instance, a model may be generated for tiled cutting inserts on the mill. Each different type of cutting insert, tiling pattern, or the like may even have a different pattern. As new data arrives, the line/contour fit for the data points may change slightly and result in minimal adjustments in the model used for determining the ROP contours. When encountering new conditions, casing structures, dulled or broken cutting inserts, or the like, abrupt changes may be expected. The changepoint detector 901 is used to segment the incoming data to allow for changes in the model used to calculate the ROP contours.

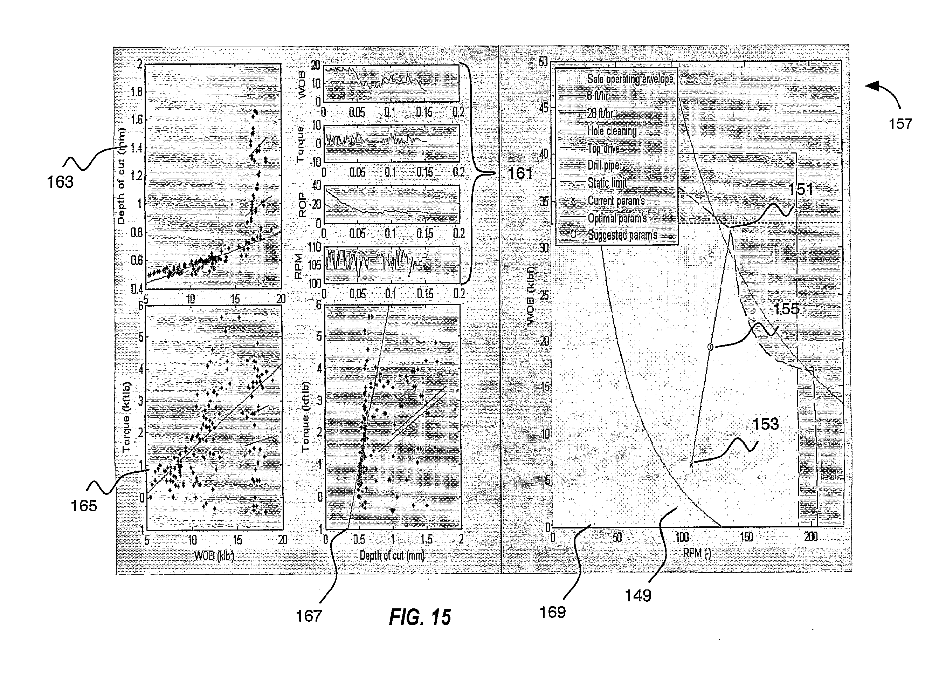

FIG. 15 is a graphical user interface 157 of an ROP optimizer using a changepoint detector to determine segmentation models for the PDC model for a drill bit, although those skilled in the art will appreciate that the model may instead include a cutting insert model for a mill. The graphical user interface 157 may include the ROP contours that may be derived from the used model, the safe operating envelope, and recommended WOB/WOM and RPM parameters. Four windows 161 plot WOB, torque, ROP, and RPM, respectively, against a depth index. In another window 163, depth-of-cut is plotted against WOB. In yet another window 165, torque is plotted against WOB. Finally, torque is plotted against depth-of-cut in yet another window 167.

The data may be segmented using a changepoint detector and fit to appropriate linear models corresponding to each segment in the manner discussed herein. Different colors may be used in the various graphs 161 through 167 to represent different segments, respectively. For instance, in graph 161, the one color may represent the first segment, a second color the second segment, a third color the current segment, and so forth. As will be appreciated from the depth of cut versus WOB graph 163, the linear relationship expected between these from the PDC model may change dramatically in the course of the drilling operation corresponding to the data points plotted in FIG. 15. Data points in a milling operation may also change in dramatic or gradual fashions depending on the changes in operating conditions in the wellbore.

The safe operating envelope and drilling/milling contours window 169 may contains a display of the safe operating envelope 149, the current parameters 153, the optimal parameters 151 and recommended parameters 155 corresponding to the current segmentation model. The graphical user interface 157 may be reported on a control console connected to a central surface processor (*e.g.,* processor 200 of FIG. 2).

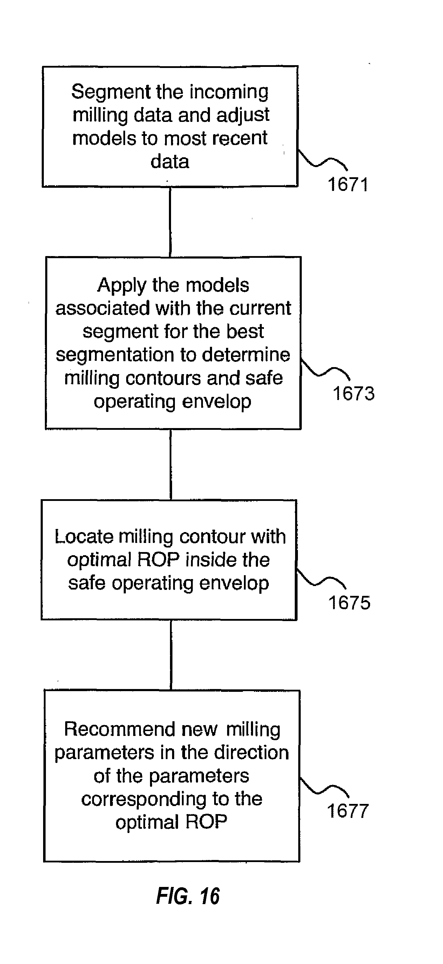

FIG. 16 is a flow-chart illustrating the operation of a changepoint detector to determine recommended parameters in an ROP optimizer illustrating the operation as new milling data is received in real-time. First, the milling data is segmented using the changepoint detector (1671), in the manner discussed herein. The segmentation may divide the data into homogenous segments and associate models to fit to the data in the segment. Thus, at a given time, there may be an optimal segmentation. That optimal segmentation may have a current segment that corresponds to the most recently arrived milling data. The data fit may be performed in real-time, thus adjusting the models to take the latest arrived data into account.

Having determined the optimal segmentation and the models for the current segment, these models may be used to determine the ROP contours corresponding to the model (*e.g.,* cutter insert models for a mill, chunky carbide on a mill, etc.) to fit to the data points in the current segment and the safe operating envelope corresponding to the milling constraints corresponding to the current segment (173). The ROP contours and safe operating envelope may be used to determine the optimal ROP contour inside the safe operating envelope and the WOM and RPM that correspond to that optimal ROP contour (175).

A recommended set of new milling parameters (*e.g.,* RPM and WOM), that move the current parameters toward the optimal parameters may also be provided (177). The recommendation may be provided to a human operator or to an automated milling apparatus.

The above-described technology for optimizing rate-of-penetration is applicable to other structures and parameters. In some embodiments, for example, the technique may be applied to roller cone bits, fixed cutter bits, underreamers, mills, pipe cutters, or the like, by using appropriate models for modeling the response of the corresponding cutting/drilling/milling tool. In yet further embodiments, the above-described mechanisms are applied to milling processes that include additional cutting structures. For instance, a mill may include a lead mill, a follow mill, and a dress mill, and WOM and torque may be measured behind the lead mill and/or follow mill. Thus, measurements multiple measurements may be obtained downhole and used for automating the milling operation. In a further alternative embodiment, a mill wear model may be added to allow the mill run to reach the desired depth without tripping for a new mill.

As discussed herein, embodiments of the present disclosure may be utilized in a milling environment to allow optimization of the downhole milling tools. Such optimization may include applying models and segmenting the incoming data to identify safe operating envelopes, and then recommending new parameters to achieve an optimal, or near optimal, ROP while still safely operating the milling system. Detecting changes in the milling conditions may include, for example, identifying changed conditions such as the existence of a casing collar or centralizer/stabilizer. Other conditions that may be evaluated include identifying swarf transport conditions/limits. Any such conditions may enable a recommended operating parameter to be changed to suit the actual conditions downhole. Systems of the present disclosure may also include additional or still other components.

For instance, milling tools may have widely variable designs, cutting insert consistency, and other characteristics. A casing mill and section mill may, for instance, perform very differently in the wellbore, and different models may be developed to segment input streams for each type of mill, and to thereby recommend parameters for optimal ROP. Moreover, mills may have individually cutting inserts brazed or otherwise coupled thereto. Individually brazing such components may produce widely different braze qualities and characteristics among cutting inserts and among mills. The braze process may also change properties of the mill blade, thereby introducing additional variation that may be difficult to characterize. By automating a mill production system to provide more consistent blade properties and braze quality, models may be more accurately developed for real-time analysis and determination of milling parameters. U.S. Patent Application Serial No. 61/945,850, filed on February 28, 2014 and titled "Automated Brazing of Milling Cutting Inserts," describes example brazing automation processes in connection with milling tools, and is expressly incorporated herein by this reference in its entirety. Further increasing the consistency in grain size and/or quality of cutting inserts (*e.g.,* tungsten carbide), or standardizing brazing procedures, may also allow increased accuracy in pre-job modeling, real-time automation, and post-job analysis of milling operations. Blade and cutting insert designs may also be modified and designed for increased accuracy.

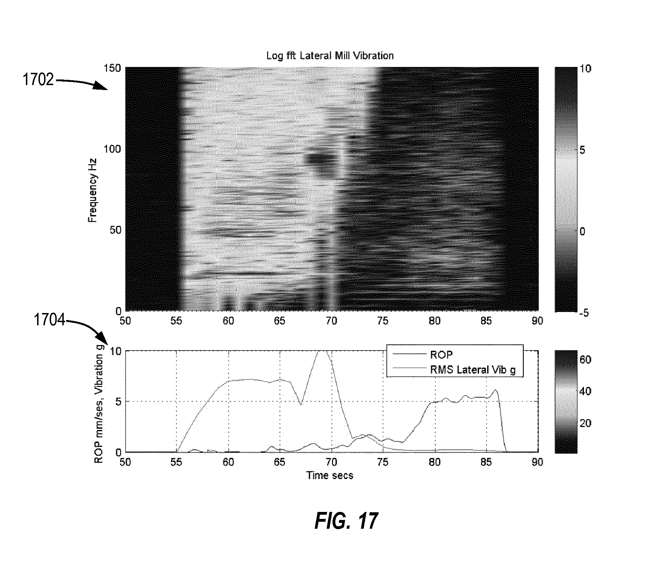

As will be appreciated in view of the disclosure herein, reducing vibration while milling may also increase cutting performance and tool durability. FIG. 17, for instance, illustrates a user interface displaying charts related to example results for a section milling operation performed on casing. A first chart 1702 includes the frequency of the vibrations over time, while a second chart 1704 shows the ROP and RMS lateral vibrations over time. As can be seen from the illustrated chart, when vibration is reduced, the ROP may correspondingly increase. Embodiments of the disclosure herein, including theoretical modeling, experimental results, real-time data, and the like may be used to modify mill design (*e.g.,* cutting insert type, cutting insert placement, cutting insert shape, blade materials, blade size/shape, etc.) to reduce damaging vibration. By instrumenting mills during milling operations, the designs may be verified. Instrumentation may also be provided to characterize the milling operation, which can be used in obtaining input data for segmentation and optimization as discussed herein. Examples instrumentation may include accelerometers, magnetometers, gyros, mechanics module board technology, rotational speed sensors, torque sensors, WOB/WOM sensors, and the like. Such information may be combined with surface data (*e.g.,* mud flow information, surface RPM, etc.) or other downhole information to increase the reliability of the tool. A combination of such information may be used in real-time to diagnose vibration and whirl, changing downhole conditions, or the like, to allow milling parameters (*e.g.,* RPM, WOM, etc.) to be adjusted.

As discussed herein, accurate and reliable performance of milling equipment may be based not solely on accuracy of real-time measurement and data analysis, but also on tool design and later adjustments of models for increased accuracy. For instance, a BHA with a mill may be designed pre-job and optimized for performance in terms of dynamic behavior relative to intended or expected operating parameters. As a result, harmful stresses and lateral, torsional, and axial vibrations can be minimized. Using pre-job analysis equipment and computing software, the entire BHA may be modeled to obtain an overview of the bending moments, vibrations, ROP expected, wear/breakage of cutting inserts, and the like over the full milling operation and/or at any instant during the milling operation. This may be performed using software code that iterates over a simulated milling operation and/or uses rock files to identify responses of mills when milling casing. Using this information, recommended milling parameters may be developed even before milling begins.

During the milling operation, real-time measurement and data analysis may be performed. Such real-time analysis may occur in manners similar to those discussed herein, and may include obtaining real-time input data, segmenting the data, applying models to determine milling contours and safe operating envelopes, and recommending new parameters within the safe envelope to obtain an optimized ROP. Measurements obtained downhole may also be calibrated in real-time at the rig site, or at a remote control/support center to define the desired limits of operation. Those limits may be continually monitored and adjusted to maximize ROP.

A subassembly on a BHA (*e.g.,* subassemblies 62 of FIG. 1) may include a dynamics and mechanics sub that may be used for real-time measurement and control of a milling process and/or for storing data for post-operation analysis. In some embodiments, the dynamics and mechanics sub may include sensors with downhole signal processing capability. There may be any number of sensors with such capability, and some embodiments contemplate between 15 and 20 such sensors (*e.g.,* 19 sensors), although there may be more than 20 or fewer than 15 of such sensors. Other or additional components of a dynamics and mechanics sub may include, for instance, strain gages and downhole compensation of downhole strain gauges to deliver high measurement accuracy, data sampling at various frequencies (*e.g.,* 1 Hz for real-time recording and/or use of data; 50 Hz in memory mode for post-run analysis), battery power, connections to other power sources (*e.g.,* connection to MWD power supply), modular components (*e.g.,* two piece sub design to aid maintainability), rotational speed sensors (*e.g.,* gyro-based sensors), or the like. Such a sub may allow monitoring of vibrations, WOM, RPM, torque, stick slip, shock risk levels, and the like.

Additional measurements may also be made by the dynamics and mechanics sub and/or other components positioned above or below the mill. For instance, a Gamma ray detector or casing collar locator may be used and may store information and/or send an input stream uphole based on data obtained downhole. Identifying the positions of casing joints, centralizers/stabilizers, downhole jewellery, or other downhole conditions may be indicative of changed conditions in the wellbore. When encountered, these obstacles or conditions may be used to change the one or more milling parameters in accordance with embodiments of the present disclosure. Still other sensors or components may also be included. For instance, a casing collar locator tool, magnetometer, or other tool may be included further uphole relative to the mill. In some embodiments, the sensor or other tool may be used to evaluate and/or interpret swarf within the drilling fluid and evaluate, interpret transport efficiency of the swarf or drilling fluid, or otherwise correlate the sensor measurements with swarf transport conditions.

Temperature sensors, thermal paint, or other temperature indicators may also be used to characterize and identify downhole conditions. For instance, thermal paint on a mill blade may be used to identify the temperature on the blades. Temperature sensors may also be used to monitor real-time conditions for comparison against operational limits. For instance, if the mill and/or dynamics and mechanics sub has an operational temperature limit *(e.g.,* 300 °F or 150 °C), the RPM, WOB, or other parameters of the mill may be monitored and controlled to maintain temperatures at acceptable limits. Moreover, when the other aspects described herein are coupled with real-time mill wear predication and/or remote monitoring centers, a rig may receive instantaneous, real-time support to ensure parameter controls are adjusted in real-time for milling optimization.

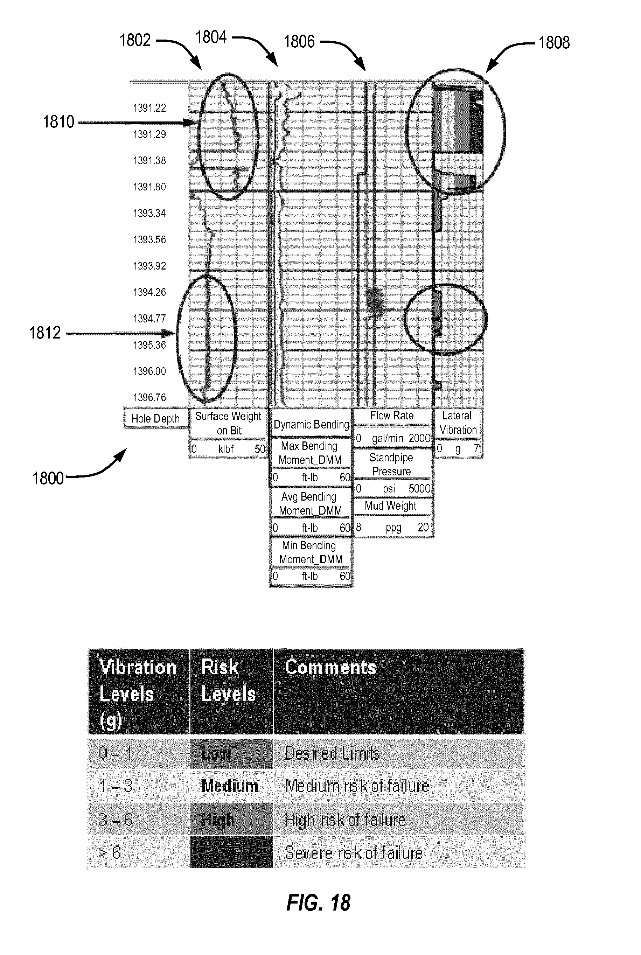

A milling mechanics log may also be produced in real-time and/or memory mode. FIG. 18, for instance, illustrates an example of a milling mechanics log file 1800. In this embodiment, the log file may provide information relative to the depth within the wellbore. Examples of information that may be provided include surface WOM 1802, dynamic bending moments 1804, mud flow rates 1806, and lateral vibrations 1808. Other or additional information that may be included on the log may include information for detecting casing joints and/or centralizers/stabilizers. Such information may be used as described herein and/or presented to an operator on a graphical user interface.

With reference to the milling mechanics log file 1800 in FIG. 18, it may be seen that various parameters may be correlated. For instance, at 1810, surface WOM is shown to be about 30 klbf, which also leads to relatively higher levels of dynamic bending and levels of lateral vibrations greater than 6g. At 1812, the surface WOM is reduced to about 10 klbf, which decreased dynamic bending, and levels of lateral vibrations dropped to less than 1g.

The milling mechanics log may be color-coded (*e.g.,* showing low, medium, high, and severe vibrational risks) and provided on a graphical user interface to a milling operator to allow the operator to take real-time actions to mitigate undesired vibrations and/or bending. The information may also be fed into an automated system as described herein to allow determinations of safe operating envelopes and parameters within the safe operating envelope. Such an envelope may allow milling to achieve an optimal ROP while maintaining rig and crew safety. Where mill wear simulation systems are also included, blade longevity may also be factored in for optimization with ROP.

During an initial run, it may be determined that automation systems recommend parameters that cause undesired lateral vibrations (or other conditions such as torsional or axial vibrations, bending moments, etc.). This may occur where, for instance, models make improper assumptions or are based on different tools, materials, or the like. By monitoring real-time the actual wellbore conditions, real-time adjustments maybe made to a model as discussed herein. Additionally, post-job data collection may enable software systems to be calibrated. For instance, factors such as string coefficients of friction may initially be assumed, but actual job data may allow calibration of actual coefficients. Repeated and continual operation in the same or other environments may enable development of more accurate models and enable calibration to ensure a close reflection of the operating environment.

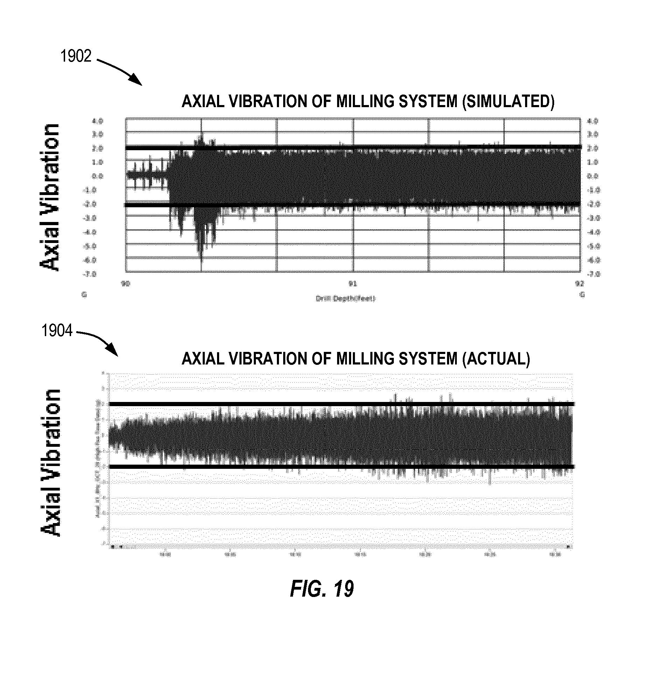

As discussed herein, embodiments of the present disclosure also contemplate storage of conditions of a wellbore and/or parameters of a milling system. In some embodiments, high frequency data *(e.g.,* 50 Hz) may be sampled and stored *(e.g.,* in a dynamics and mechanics sub operating in memory mode). Post-job, the information may be retrieved for subsequent benchmarking for software predictions and simulation. FIG. 19, for instance, illustrates a pre-job simulation of axial vibrations 1902, along with the actual axial vibrations measured in a milling operation 1904. By comparing the two simulations 1902, 1904, modifications may be made to the simulation models to calibrate friction coefficients, material properties, etc. to allow increased simulation accuracy.

One skilled in the art will appreciate in view of the present disclosure, that systems, methods, tools, and assemblies of embodiments disclosed herein, or within the skill of one in the art in view of the disclosure herein, may be used in a variety of environments and for a variety of objects. For instance, embodiments of the present disclosure may be used to identify true technical limits of performance in milling operations, without risking lost rig time associated with exceeding the limit, or due to inefficiencies resulting from operating too far below the limit. Mill performance may also be predicted, as may the dynamic behavior of the BHA in space and time. Such predications may allow re-design and/or optimization in pre-job planning and simulation. Weak areas in the drill string and BHA may also be identified to reduce the risk of losing a tool downhole. Harmful lateral, torsional, and axial vibrations, damaging bending moments, and the like may also be minimized, and consistent operating parameters may be used at rig site operations to achieve consistently higher ROP.

It should also be noted that in the description provided herein, computer software may be used, or may be described, as performing certain tasks. For example, a changepoint detector may perform a segmentation of a data stream by following a described methodology. That, of course, may mean that one or more central processing units executing the instructions included in the changepoint detector (or equivalent instructions) could perform the segmentation by appropriately manipulating data and data structures stored in memory and secondary storage devices controlled by the central processing unit(s). Furthermore, while the description provides for embodiments with particular arrangements of computer processors and peripheral devices, there is virtually no limit to alternative arrangements, for example, multiple processors, distributed computing environments, web-based computing. Each such alternative is to be considered equivalent to those described and claimed herein.

It should also be noted that in the development of any actual embodiment, numerous decisions specific to circumstance should be made to achieve the developer's specific goals, such as compliance with system-related and business-related constraints, which may vary from one implementation to another. Moreover, it will be appreciated in view of the disclosure herein that such a development effort might be complex and time-consuming but would nevertheless be a routine undertaking for those of ordinary skill in the art having the benefit of this disclosure.

In this disclosure, the term machine-readable media broadly includes both storage media and transmission media. Machine-readable storage media encompasses one or more devices for storing data, including, but not limited to, read-only memory (ROM), random access memory (RAM), magnetic RAM, core memory, magnetic disk storage media, optical storage media, flash memory devices, or other hardware media for storing machine-readable information. In contrast, machine readable transmission media encompasses wireless channels, signals per se, and other media capable of carrying instructions and/or data. Machine-readable media may include combinations of both storage and transmission media, and may thus include, among other things, any combination of portable or fixed storage devices, optical storage devices, wireless channels, and various other mediums capable of storing, containing, or carrying instructions and/or data.

From the foregoing it will be apparent that a technology has been presented herein that provides for a mechanism for real-time or near real-time determination of changes in industrial processes in a manner that allows operators of such processes—which operators may be human controllers, processors, drivers, control systems, or the like—to make note of/detect events in the operation of a downhole milling process, take corrective action if desired, change operation of the procedure if desired, and/or optimally operate the processes in light of the changes in the operating environment, status of the system performing the procedure, and the like. The technology presented provides for a mechanism that is noise tolerant, that may be readily applied to a variety of milling or other remedial or downhole processes, and that is computationally inexpensive.

The embodiments presented herein may either be used to recommend courses of action to operators of industrial processes or as input in automation systems. While the techniques herein are described primarily in the context of milling within downhole wellbores for use in the exploration or production of oil and gas resources, the techniques are applicable to drilling and other hydrocarbon-related processes, for example, the exploration for water, transport of hydrocarbons, modeling of production data from hydrocarbon wells, placement of utility lines, and the like.

In the foregoing description, for the purposes of illustration, various methods and/or procedures were described in a particular order. It should be appreciated that in alternate embodiments, the methods and/or procedures may be performed in an order different than that described.

It should also be appreciated that the methods described herein may be performed by hardware components and/or may be embodied in sequences of machine-readable or machine-executable instructions, which may be used to cause a machine, such as a general-purpose or special-purpose processor or logic circuits programmed with the instructions, to perform the methods. These machine-executable instructions may be stored on one or more types of machine-readable storage media, such as CD-ROMs or other type of optical disks, floppy diskettes, ROMs, RAMs, EPROMs, EEPROMs, magnetic or optical cards, flash memory, or other types of machine-readable storage media suitable for storing electronic instructions. The machine-executable instructions may also, or otherwise, be carried on by one or more types of machine-readable transmission media, such as wireless communications, signals per se, carrier waves, and the like. Combinations of machine-readable storage and transmission media may also be used to access or otherwise operate using machine-executable instructions.

Merely by way of example, some embodiments of the disclosure provide software programs, which may be executed on one or more computers, for performing the methods and/or procedures described above. In particular embodiments, for example, there may be a plurality of software components configured to execute on various hardware devices. In other embodiments, the methods may be performed by a combination of hardware and software.

Various embodiments of the disclosure, although different, are not mutually exclusive. For example, a particular feature, structure, or characteristic described herein in connection with one embodiment may be implemented within other embodiments without departing from the spirit and scope of the disclosure. In addition, it is to be understood that the location or arrangement of individual elements within each disclosed embodiment may be modified without departing from the spirit and scope of the disclosure. In other instances, well-known features have not been described in detail to avoid unnecessarily complicating the description. Hence, while detailed descriptions of one or more embodiments of the disclosure have been given above, various alternatives, modifications, and equivalents will be apparent to those skilled in the art without varying from the spirit of the disclosure. Moreover, except where clearly inappropriate or otherwise expressly noted, it should be assumed that the features, devices and/or components of different embodiments can be substituted and/or combined.

While embodiments herein have therefore been described with primary reference to mills and other downhole tools for milling or cutting casing or tubulars, such embodiments are provided solely to illustrate some environments in which aspects of the present disclosure may be used. In other embodiments, automation systems, tools, assemblies, methods, and other components discussed herein, or which would be appreciated in view of the disclosure herein, may be used in other applications, including in automotive, aquatic, aerospace, hydroelectric, manufacturing, or even other downhole environments. For instance, rate of penetration may be optimized during a milling operation that occurs above-ground in a vertical, horizontal, or other arrangement used for testing, manufacturing, or the like.

In the description and in the claims, the terms "including" and "comprising" are used in an open-ended fashion, and thus should be interpreted to mean "including, but not limited to ...." Further, the terms "axial" and "axially" generally mean along or parallel to a central or longitudinal axis, while the terms "radial" and "radially" generally mean perpendicular to a central longitudinal axis.

In the description herein, various relational terms are provided to facilitate an understanding of various aspects of some embodiments of the present disclosure in relation to the provided drawings. Relational terms such as "bottom," "below," "top," "above," "back," "front," "left", "right", "rear", "forward", "up", "down", "horizontal", "vertical", "clockwise", "counterclockwise," "upper", "lower", and the like, may be used to describe various components, including their operation and/or illustrated position relative to one or more other components. Relational terms do not indicate a particular orientation for each embodiment within the scope of the description or claims. For example, a component of a bottomhole assembly that is "below" another component may be more downhole while within a vertical wellbore, but may have a different orientation during assembly, when removed from the wellbore, or in a deviated borehole. Accordingly, relational descriptions are intended solely for convenience in facilitating reference to various components, but such relational aspects may be reversed, flipped, rotated, moved in space, placed in a diagonal orientation or position, placed horizontally or vertically, or similarly modified. Relational terms may also be used to differentiate between similar components; however, descriptions may also refer to certain components or elements using designations such as "first," "second," "third," and the like. Such language is also provided merely for differentiation purposes, and is not intended limit a component to a singular designation. As such, a component referenced in the specification as the "first" component may for some but not each embodiment be the same component referenced in the claims as a "first" component.

Furthermore, to the extent the description or claims refer to "an additional" or "other" element, feature, aspect, component, or the like, it does not preclude there being a single element, or more than one, of the additional element. Where the claims or description refer to "a" or "an" element, such reference is not be construed that there is just one of that element, but is instead to be inclusive of other components and understood as "one or more" of the element. It is to be understood that where the specification states that a component, feature, structure, function, or characteristic "may," "might," "can," or "could" be included, that particular component, feature, structure, or characteristic is provided in some embodiments, but is optional for other embodiments of the present disclosure. The terms "couple," "coupled," "connect," "connection," "connected," "in connection with," and "connecting" refer to "in direct connection with," "integral with," or "in connection with via one or more intermediate elements or members."

Certain embodiments and features may have been described using a set of numerical limits. It should be appreciated that any particular value is contemplated, as are ranges including the combination of any two values, unless otherwise indicated. Any numerical value in the description or claims is "about" or "approximately" the indicated value, and takes into account experimental error and variations that would be expected by a person having ordinary skill in the art.

In the claims, means-plus-function clauses are intended to cover the structures described herein as performing the recited function, including both structural equivalents and equivalent structures. Thus, although a nail and a screw may not be structural equivalents in that a nail employs a cylindrical surface to couple wooden parts together, whereas a screw employs a helical surface, in the environment of fastening wooden parts, a nail and a screw may be equivalent structures. It is the express intention of the applicant not to invoke so-called "means-plus-function" or other functional claiming for any limitations of any of the claims herein, except for those in which the claim expressly uses the words 'means for' or 'step for' together with an associated function.

## Claims

1. A method for optimizing rate of penetration in a downhole milling process by automating, or partially automating, the process, the method comprising:
receiving a stream of input data from at least one sensor associated with a downhole milling system;
identifying a plurality of segments in the stream of input data, a changepoint dividing each segment from an adjacent segment;
generating an output from the plurality of segments using models corresponding to the segments; and
using the output to control at least one parameter of the downhole milling process.

2. The method recited in claim 1, the models being specific to milling of casing or milling of steel casing.

3. The method recited claim 1, wherein controlling the at least one parameter of the downhole milling process is based on output from models specific to drilling.

4. The method recited in claim 1, further comprising:
evaluating one or more of lateral vibration, torsional vibration, axial vibration, or bending moments, and using such information in generating the output.

5. The method recited in claim 1, further comprising:
identifying a safe operating envelope based on the plurality of segments.

6. The method recited in claim 1, further comprising:
indicating to a controller of the at least one parameter that a likely change of operating condition has occurred.

7. The method recited in claim 6, further comprising:
changing the at least one parameter automatically via the controller; or
recommending the controller change the at least one parameter.

8. The method recited in claim 1, wherein receiving the stream of input data from the at least one sensor includes:
receiving the stream of input data from at least one downhole sensor;
receiving the stream of input data from at least one above-surface sensor associated with the downhole milling system; or
receiving the stream of input data from at least one above-surface sensor and at least one downhole sensor.

9. The method recited in claim 1, wherein receiving the stream of input data from at least one sensor includes at least one of receiving a stream of surface pressure data or correlating the surface pressure data with swarf transport conditions.

10. Machine-readable media including machine-readable storage media and machine-readable instructions that, when executed by a computing system, cause a milling system to perform a method for automating a downhole milling process, the method comprising:
receiving an input stream from at least one sensor of a milling system, the input stream including at least a stream of surface measurements;
segmenting the input stream;
identifying a safe operating envelope based on segments of the input stream and models for the segments; and
automatically changing at least one parameter of the milling system along a path of optimal rate of penetration, while remaining within the safe operating envelope.

11. The machine-readable media recited in claim 10, wherein identifying the safe operating envelope includes identifying swarf transport limits, and using the identified swarf transport limits in determining the optimal rate of penetration.

12. The machine-readable media recited in claim 10, wherein the milling process includes a downhole section milling process.

13. The machine-readable media recited in claim 10, wherein the milling process includes a downhole casing milling process.

14. The machine-readable media recited in claim 10, wherein the input stream includes data indicative of a location of a casing joint and/or a centralizer/stabilizer of the casing.

15. The machine-readable media recited in claim 10, wherein the input stream further includes a stream of downhole measurements.
